# EUROPEAN PATENT APPLICATION

(11) **EP 4 685 624 A1**
(43) Date of publication of application: **28.01.2026**
(21) Application number: 24832332.1
(22) Date of filing: 12.06.2024
(51) Int. Cl.: G06F 3/04845, G06F 9/451, G06F 3/04842, G06T 13/80, G06T 11/00, G06F 40/279

(54) **METHOD AND ELECTRONIC DEVICE FOR PROVIDING CUSTOMIZED SCREEN**

(30) Priority: 28.06.2023 KR 20230083776; 08.11.2023 KR 20230153935; 23.11.2023 KR 20230164845
(71) Applicant: Samsung Electronics Co., Ltd., Suwon-si, Gyeonggi-do 16677 (KR)
(72) Inventor: KIM, Jeongseop, Suwon-si, Gyeonggi-do 16677 (KR); KWON, Jungmin, Suwon-si, Gyeonggi-do 16677 (KR); SHIN, Hyeji, Suwon-si, Gyeonggi-do 16677 (KR)
(74) Representative: Gulde & Partner
(86) International application number: PCT/KR2024/008100
(87) International publication number: WO 2025/005552

(57) **Abstract**

A method includes: obtaining an original image designated as a background screen; obtaining, based on time information and weather information, a predefined prompt; obtaining display area information of a user interface (UI) object; generating a modified image corresponding to the time information and the weather information by applying the original image, the predefined prompt, and the display area information as input data to a generative model that generates the modified image, wherein in the modified image, the predefined prompt is reflected in a display area where the UI object is displayed in accordance with a first degree, and the predefined prompt is reflected in a remaining area other than the display area in accordance with a second degree that is different from the first degree; and displaying the modified image and the UI object as the background screen by overlaying the UI object on the modified image.

## Description

### Technical Field

The disclosure relates to a method, electronic device, server, and system for changing and/or generating a screen and providing the screen to a user.

### Background Art

Generative Al is a technology that learns structures and patterns from large-scale datasets and generates new synthetic data based on input data. The generative Al produces human-level results for a variety of tasks involving text, images, voices, videos, music, etc. For example, an image generative model creates a new image based on a given text, or a new image based on a given image.

However, even when the image generative model is capable of generating, based on a given text or image, an image containing content that matches the input, it is difficult to obtain a result adaptively according to a user's current context. For example, the image generative model may generate an image that does not accurately reflect a user's intended inquiry or desire.

### Disclosure of Invention

### Solution to Problem

According to an aspect of the disclosure, a method, performed by an electronic device, of changing a background screen and providing the changed background screen may be provided. The method may include obtaining an original image designated as the background screen. The method may include obtaining time information and weather information. The method may include obtaining, based on the time information and weather information, a predefined prompt for image generation. The method may include obtaining display area information of a user interface (UI) object displayed to be overlaid on the original image. The method may include generating a modified image corresponding to the time information and weather information by applying the original image, the predefined prompt, and the display area information as input data to a generative model. In the modified image, a degree to which the predefined prompt is reflected may differ between a display area where the UI object is displayed and a remaining area other than the display area. The method may further include displaying the modified image and the UI object as the background screen by overlaying the UI object on the modified image.

According to an aspect of the disclosure, an electronic device for changing and providing a background screen may be provided. The electronic device may include a display, a memory storing one or more instructions, and one or more processors configured to execute the one or more instructions stored in the memory. The one or more processors may be configured to execute the one or more instructions to obtain an original image designated as a background screen. The one or more processors may be configured to execute the one or more instructions to obtain time information and weather information. The one or more processors may be configured to execute the one or more instructions to obtain, based on the time information and weather information, a predefined prompt for image generation. The one or more processors may be configured to execute the one or more instructions to obtain display area information of a UI object displayed to be overlaid on the original image. The one or more processors may be configured to execute the one or more instructions to generate a modified image corresponding to the time information and weather information by applying the original image, the predefined prompt, and the display area information as input data to a generative model. In the modified image, a degree to which the predefined prompt is reflected may differ between a display area where the UI object is displayed and a remaining area other than the display area. The one or more processors may be configured to execute the one or more instructions to control the display to display the modified image and the UI object as the background screen by overlaying the UI object on the modified image.

According to an aspect of the disclosure, a method, performed by an electronic device, of changing and providing a background screen may be provided. The method may include obtaining an image. The method may include obtaining time information and weather information. The method may include obtaining, based on the time information and weather information, a predefined prompt of a generative model for the image. The method may include generating a modified image including at least one feature of the image by applying the image and the predefined prompt as input data to the generative model. The method may include displaying the modified image and the UI object on a screen of the electronic device by overlaying the UI object on the modified image.

According to an aspect of the disclosure, an electronic device for changing and providing a background screen may be provided. The electronic device may include a display, a memory storing one or more instructions, and one or more processors configured to execute the one or more instructions stored in the memory. The one or more processors may be configured to execute the one or more instructions to obtain an image. The one or more processors may be configured to execute the one or more instructions to obtain time information and weather information. The one or more processors may be configured to execute the one or more instructions to obtain, based on the time information and weather information, a predefined prompt of a generative model for the image. The one or more processors may be configured to execute the one or more instructions to generate a modified image including at least one feature of the image by applying the image and the predefined prompt as input data to the generative model. The one or more processors may be configured to execute the one or more instructions to control the display to display the modified image and the UI object on a screen of the electronic device by overlaying the UI object on the modified image.

According to an aspect of the disclosure, a method, performed by an electronic device, of changing and providing a background screen may be provided. The method may include obtaining an original image designated as a background screen. The method may include obtaining time information and weather information. The method may include obtaining, based on the time information and weather information, a predefined prompt of a generative model for the image. The method may include obtaining property information of a UI object displayed to be overlaid on the original image. The method may include generating a modified image corresponding to the time information and weather information and changed property information of the UI object by applying the original image, the predefined prompt, and the property information of the UI object as input data to the generative model. The method may include changing a property of the UI object based on the changed property information of the UI object. The method may include displaying the modified image and the UI object on the screen by overlaying the UI object on the modified image.

According to an aspect of the disclosure, an electronic device for changing and providing a background screen may be provided. The electronic device may include a display, a memory storing one or more instructions, and one or more processors configured to execute the one or more instructions stored in the memory. The one or more processors may be configured to execute the one or more instructions to obtain an original image designated as a background screen. The one or more processors may be configured to execute the one or more instructions to obtain time information and weather information. The one or more processors may be configured to execute the one or more instructions to obtain, based on the time information and weather information, a predefined prompt of a generative model for the image. The one or more processors may be configured to execute the one or more instructions to obtain property information of a UI object displayed to be overlaid on the original image. The one or more processors may be configured to execute the one or more instructions to generate a modified image corresponding to the time information and weather information and changed property information of the UI object by applying the original image, the predefined prompt, and the property information of the UI object as input data to the generative model. The one or more processors may be configured to execute the one or more instructions to change a property of the UI object based on the changed property information of the UI object. The one or more processors may be configured to execute the one or more instructions to control the display to display the modified image and the UI object on the screen by overlaying the UI object on the modified image.

According to an aspect of the disclosure, provided is a computer-readable recording medium having recorded thereon a program for executing any one of the methods, performed by an electronic device and/or a server, of providing a changed background screen, as described above and below.

### Brief Description of Drawings

FIG. 1 is a schematic diagram illustrating an example in which an electronic device provides a customized screen, according to an embodiment of the disclosure.
FIG. 2 is a flowchart illustrating an operation in which an electronic device provides a customized screen, according to an embodiment of the disclosure.
FIG. 3 illustrates an operation of an electronic device according to an embodiment of the disclosure.
FIG. 4 is a diagram illustrating inference by a generative model, according to an embodiment of the disclosure.
FIG. 5 is a diagram illustrating training of a generative model, according to an embodiment of the disclosure.
FIG. 6A is a diagram illustrating image variations generated by an electronic device, according to an embodiment of the disclosure.
FIG. 6B is a diagram illustrating predefined prompts for image variations, which are used by an electronic device, according to an embodiment of the disclosure.
FIG. 6C is a diagram to illustrating an operation of an electronic device obtaining a predefined prompt, according to an embodiment of the the disclosure.
FIG. 7 is a diagram illustrating a structure of a generative model according to an embodiment of the disclosure.
FIG. 8 is a diagram illustrating an operation in which an electronic device uses an evaluation score to determine a customized image, according to an embodiment of the disclosure.
FIG. 9 is a diagram illustrating an operation in which an electronic device changes the properties of a user interface (UI) object, according to an embodiment of the disclosure.
FIG. 10 is a diagram illustrating an operation in which an electronic device adjusts the degree of reflection of a predefined prompt when generating a synthetic image, according to an embodiment of the disclosure.
FIG. 11 is a diagram illustrating an operation in which an electronic device generates a synthetic image by using a plurality of predefined prompts, according to an embodiment of the disclosure.
FIG. 12 is a flowchart illustrating an operation in which an electronic device provides a customized screen, according to an embodiment of the disclosure.
FIG. 13 is a diagram illustrating a structure of a generative model according to an embodiment of the disclosure.
FIG. 14A is a flowchart illustrating an operation in which an electronic device generates synthetic images, according to an embodiment of the disclosure.
FIG. 14B is a flowchart illustrating an operation in which an electronic device generates synthetic images, according to an embodiment of the disclosure.
FIG. 15 is a flowchart illustrating an operation in which an electronic device provides a customized screen, according to an embodiment of the disclosure.
FIG. 16A is a diagram illustrating an operation in which an electronic device provides a dynamic screen, according to an embodiment of the disclosure.
FIG. 16B is a diagram illustrating an operation in which an electronic device generates a dynamic screen, according to an embodiment of the disclosure.
FIG. 17 is a diagram illustrating an operation in which an electronic device provides image variations, according to an embodiment of the disclosure.
FIG. 18 is a diagram illustrating an operation in which an electronic device generates a video variation, according to an embodiment of the disclosure.
FIG. 19 is a block diagram of a configuration of an electronic device according to an embodiment of the disclosure.
FIG. 20A is a block diagram of a configuration of a server according to an embodiment of the disclosure.
FIG. 20B is a block diagram of a configuration of a server according to an embodiment of the disclosure.

### Mode for the Invention

Terms used in the present specification will now be briefly described and then the disclosure will be described in detail. Throughout the disclosure, the expression "at least one of a, b or c" indicates only a, only b, only c, both a and b, both a and c, both b and c, all of a, b, and c, or variations thereof.

The terms used herein may be general terms currently widely used in the art based on functions described in the disclosure, but may be changed according to an intention of a technician engaged in the art, precedent cases, advent of new technologies, etc. Furthermore, specific terms may be arbitrarily selected by the applicant, and in this case, the meaning of the selected terms will be described in detail in the detailed description of the disclosure. Thus, the terms used herein should be defined not by simple appellations thereof but based on the meaning of the terms together with the overall description of the disclosure.

Singular expressions used herein are intended to include plural expressions as well unless the context clearly indicates otherwise. All the terms used herein, which include technical or scientific terms, may have the same meaning that is generally understood by one of ordinary skill in the art. Furthermore, although the terms including an ordinal number such as "first", "second", etc. may be used herein to describe various elements or components, these elements or components should not be limited by the terms. The terms are only used to distinguish one element or component from another element or component.

Throughout the specification, when a part "includes" or "comprises" an element, unless there is a particular description contrary thereto, it is understood that the part may further include other elements, not excluding the other elements. In addition, terms such as "portion", "module", etc., described herein refer to a unit for processing at least one function or operation and may be implemented as hardware or software, or a combination of hardware and software.

The disclosure relates to a method of providing a background screen by generating various variations of an image by using a generative model and providing an image corresponding to a context from among the variations of the image, together with additional information.

As used herein, a "customized screen" may mean graphic data that is adaptively displayed according a user's current context. Also, as used herein, a "modified image" may refer to a synthetic image obtained by changing an original image to match the context. The customized screen may include a modified image and information related to the context. In the disclosure, the customized screen may be applied to a lock screen and/or background screen of an electronic device.

As used herein, "context information" may refer to various types of information corresponding to a context in which an electronic device modifies an image. For example, the context information may include information related to a surrounding environment and/or situation of the electronic device. For example, the context information may include various types of information that may indicate conditions/states/characteristics external to the electronic device, such as, weather, season, temperature, humidity, illuminance, altitude, etc., at a current location and time of the electronic device. In addition, for example, the context information may include various types of information that may indicate a situation/status of a user of the electronic device (e.g., the user's emotions, activities, life routine, health, etc.). Furthermore, in one or more examples, the context information may detect a facial expression of a subject as context information. For example, based on the facial expression, the context information may be correlated with a person's mood such as happy, sad, concerned, etc.

The context information may be obtained in various ways during operation of the electronic device. The context information may be received by the electronic device from an external device. For example, the context information may include weather information and time information obtained from an external server. The context information may be measured using one or more sensors in the electronic device. For example, the context information may include information such as ambient temperature, humidity, illuminance, altitude, etc. measured by a sensor. For example, the context information may be obtained by processing data collected during use of the electronic device. The collected data may include sensor data. For example, the context information may include information such as a user's emotions, activity history, life routines, health, etc. In addition, the context information may be information directly input by the user.

As used herein, "generative artificial intelligence (Al)" may refer to a type of Al technology capable of generating new text, images, etc. in response to input data (e.g., text, images, etc.). A "generative model" may refer to a neural network model that implements generative Al technology. A generative model is capable of generating new data having similar characteristics to input data or new data corresponding to the input data by learning patterns and structures in training data. For example, the generative model may use image-to-image to edit an original image or generate a new image that is similar to the original image.

Embodiments of the disclosure will be described more fully hereinafter with reference to the accompanying drawings so that they may be easily implemented by one of ordinary skill in the art. However, the disclosure may be implemented in many different forms and should not be construed as being limited to an embodiment of the disclosure set forth herein. Furthermore, parts not related to descriptions of the disclosure are omitted to clearly explain the disclosure in the drawings, and like reference numerals denote like elements throughout.

Hereinafter, the disclosure is described in detail with reference to the accompanying drawings.

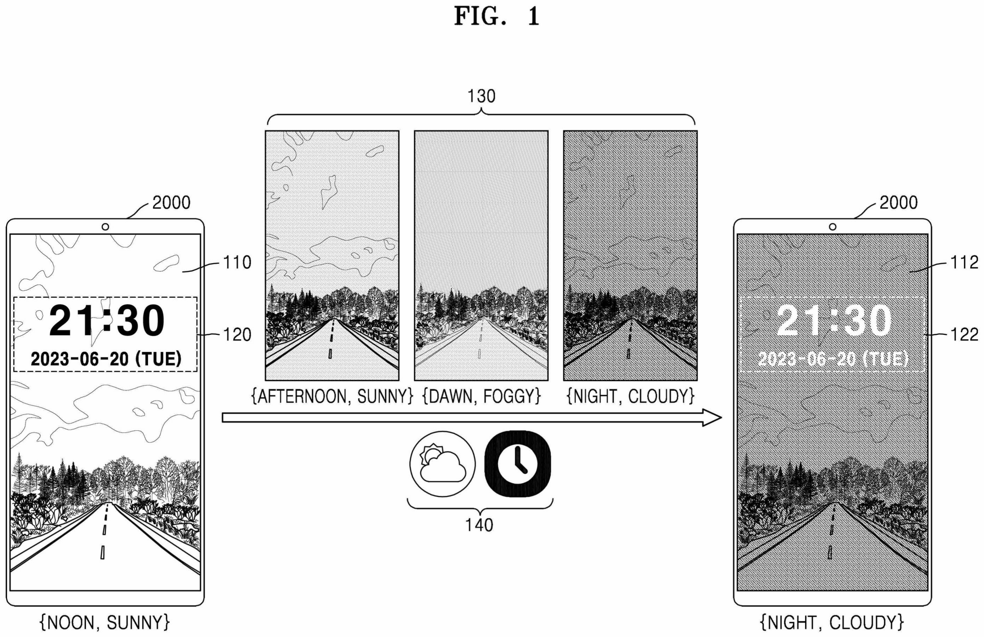

FIG. 1 is a schematic diagram illustrating an example in which an electronic device provides a customized screen, according to an embodiment of the disclosure.

In an embodiment of the disclosure, an electronic device 2000 may provide a user-customized screen that adaptively changes a background screen of the electronic device 2000 based on a user's environment, situation, etc.

For example, the electronic device 2000 may respectively convert a default image 110 and a default user interface (UI) object 120 displayed on a screen of the electronic device 2000 into a customized image 112 and a customized UI object 122. In other words, the customized screen provided by the electronic device 2000 may include the customized image 112 obtained by editing the original image and customized additional information. In the disclosure, the customized UI object 122 is described as an example of customized additional information. However, the additional information is not limited thereto. The additional information may include various types of data such as text, icons, audio, etc.

An example of converting a landscape image with a context of "daytime, sunny weather", as an example of the default image 110, into a user-customized image and providing the user-customized image is described with reference to FIG. 1. In the example of FIG. 1, a default screen of the electronic device 2000 may include the default image 110 and additional information (e.g., the UI object 120). The default screen may correspond to an idle screen or a lock screen of the electronic device 2000, but is not limited thereto. For example, the default image 110 may be displayed when a predetermined action is performed (e.g., change volume, open application, pressing of home button, etc.)

In an embodiment of the disclosure, the electronic device 2000 may obtain synthetic images 130 corresponding to variations of the default image 110 by using a generative model. The generative model may change a context of an image. For example, the generative model may generate image variations by changing properties that may correspond to context information (e.g., weather information and/or time information) 140 while maintaining image consistency. The synthetic images 130 may include a variety of images obtained by modifying the default image 110 having the context of {noon, sunny} to have different time information and weather information, such as an image having a context of {afternoon, sunny}, an image having a context of {dawn, foggy}, an image having a context of {night, cloudy}, etc.

The electronic device 2000 may obtain the context information 140 including at least one of time information or weather information. The context information 140 may be obtained via accessing the Internet to retrieve specific information (e.g., weather information). Furthermore, the context information 140 may be obtained by using one or devices on the electronic device 2000 such as a microphone or camera. The electronic device 2000 may select an image corresponding to the context information 140 from among the synthetic images 130. The context information 140 may be periodically or aperiodically updated with latest information. For example, the context information 140 may include current time information and current weather information. In detail, the current time may be "21:30" and the current weather may be "cloudy". The electronic device 2000 may determine an image having a context corresponding to the context information 140 from among the synthetic images 130 as the customized image 112. In this case, among the synthetic images 130, an image having a context of {night, cloudy} may be determined as the customized image 112.

In an embodiment of the disclosure, the electronic device 2000 may change properties of the additional information that may be displayed with the customized image 112. For example, when the default image 110 is replaced with the customized image 112, properties (e.g., a text color) of the default UI object 120 may be changed to correspond to the customized image 112. In detail, for example, when the context of the customized image 112 is nighttime, dark color representation relatively increases within the customized image 112. The electronic device 2000 may change property values of the additional information or create new property values based on characteristics of the customized image 112. Accordingly, unlike the text included in the default UI object 120 that is displayed in a dark color, text in the customized UI object 122 may be displayed in a bright color. For example, when the default image 110 is a display of a sunny scene, the default UI object 120 may be black to contrast to a sunny scene. However, the customized image 112 is a cloudy scene, the customized UI object 122 may be white to contrast the cloudy scene and become more visible compared to displaying the black default UI object 120 on the cloud scene.

In the disclosure, for brevity and clarity of description, several representative examples of the context information 140 (e.g., time, weather, season, etc.) are described. However, information included in the context information 140 is not limited to the above-described examples. For example, context information representing various contexts related to the user in addition to weather, time, and season may be used. For example, the context information may include various types of information such as the user's emotions, activities, life routine, health, etc. For example, the context information may also include information such as ambient temperature, humidity, illuminance, altitude, etc. Accordingly, the synthetic images 130 obtained by changing properties corresponding to the context information may also have various contexts. For example, the user's emotions may be classified into detailed categories, such as "joy, sadness, surprise, excitement," etc., and the synthetic images 130 may include images that have been altered to have contexts respectively corresponding to the user's emotions. As a result, the electronic device 2000 may provide a customized screen obtained by adaptively changing the background screen to correspond to the user's various contexts.

In an embodiment of the disclosure, the electronic device 2000 may be any one of various types of devices that provide a customized screen to the user. For example, the electronic device 2000 may be implemented as any one of various types and forms of electronic devices including displays. Examples of the electronic device 2000 may include, but are not limited to, devices capable of displaying a customized screen on a display, such as a smart TV, a smartphone, a tablet personal computer (PC), a laptop PC, an eyewear display, a head-mounted display (HMD), etc. For example, the electronic device 2000 may be implemented as any one of various types and forms of electronic devices that are to be connected to a display by wire or wirelessly. For example, the electronic device 2000 may include, but is not limited to, a set-top box, a desktop PC, or any other device that is connected to a display by wire or wirelessly and capable of displaying a customized screen.

Specific operations in which the electronic device 2000 provides a customized screen to the user are described in more detail with reference to the following drawings and description.

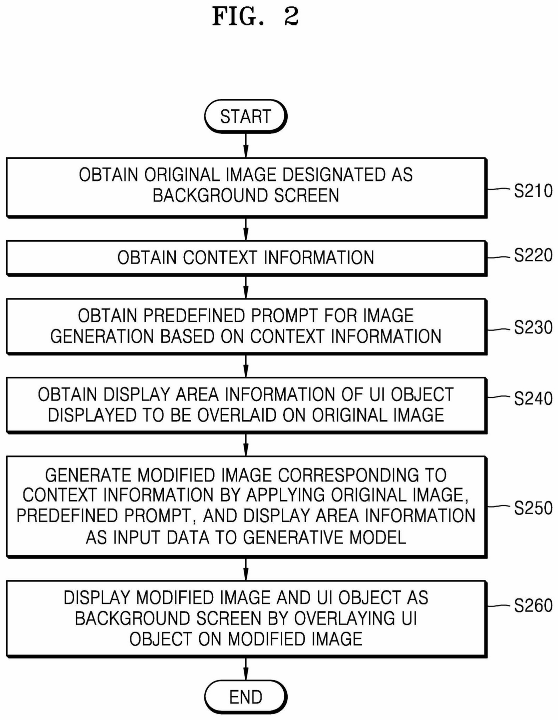

FIG. 2 is a flowchart illustrating an operation in which an electronic device provides a customized screen, according to an embodiment of the disclosure.

Operations performed by the electronic device 2000 to change a background screen to provide a customized screen are briefly described with reference to FIG. 2, and a detailed description of each of the operations is described with reference to the following drawings.

In operation S210, the electronic device 2000 may obtain an original image designated as a background screen. The original image may refer to original data that is to be edited by the electronic device 2000 or used by the electronic device 2000 to generate a new image. The electronic device 2000 may edit the original image to create various image variations, and provide the user with a customized image that matches the user's situation from among the image variations. In one or more examples, the original image may be the default image 110.

In an embodiment of the disclosure, the electronic device 2000 may obtain an image stored in the electronic device 2000. For example, based on an image editing/generation function being executed, the electronic device 2000 may provide an image loading function that allows the user to select one of the images stored in a media storage of the electronic device 2000. The electronic device 2000 may obtain a user input for selecting an image from one or more images stored in the electronic device 2000. Images stored in the electronic device 2000 may include images captured using a camera of the electronic device 2000 and images received from external sources (e.g., images downloaded from a public domain, images received from other electronic devices, etc.).

In an embodiment of the disclosure, the electronic device 2000 may obtain images through real-time capturing using the camera. The electronic device 2000 may obtain images in real time via the camera. For example, based on the image editing/generation function being executed, the electronic device 2000 may provide an image capture function that allows the electronic device 2000 to obtain a new image.

In an embodiment of the disclosure, the electronic device 2000 may identify an image currently being applied as the background screen of the electronic device 2000 and determine the identified image as an input image for performing an image editing/generation operation.

The "image" referred to in operation S210 is data used as input data for the generative model. The term "image" may be replaced with various other terms representing the same/similar concept. For example, the term "image" may be replaced with other terms such as "original image", "default image", "input image", "initial image", "initial background image", "initial wallpaper", and "user image", but is not limited thereto.

In operation S220, the electronic device 2000 may obtain context information. The context information may include at least one of time information or weather information that is real-time information. For example, the context information may include time information, weather information, season information, etc. at the user's current location (e.g., a current location of the electronic device 2000).

In an embodiment, the electronic device 2000 may obtain location information. The location information may be obtained in a variety of ways known in the art. For example, the location information may be obtained by the electronic device 2000 via a GPS receiver embedded in the electronic device 2000, or the location information may be obtained via a network to which the electronic device 2000 is currently connected (e.g., a cellular base station, etc.). Upon obtaining the location information, the electronic device 2000 may obtain current weather information and current time information corresponding to the location information.

In an embodiment, the location information may be location information for a location other than the current location of the electronic device 2000. For example, the electronic device 2000 may identify location information included in metadata of the original image. Alternatively, the electronic device 2000 may receive user input from a user entering a specific location. In this case, the electronic device 2000 may obtain current weather information and current time information corresponding to the other location information. In this case, a separate user input may be received by the electronic device 2000 to utilize location information other than the current location of the electronic device 2000. When location information other than the current location of the electronic device 2000 is obtained, the modified image generated by the electronic device 2000 may reflect the time, weather, season, etc. of the other location.

In an embodiment of the disclosure, the context information may include other information available to generate a modified image in addition to the real-time information. The context information may include information related to the user of the electronic device 2000 and information obtained according to various situations and environments of the electronic device 2000. For example, the context information may include various types of information related to the user's emotions, activities, life routine, etc. Also, for example, the context information may include information about an environment in which the user is located, such as ambient temperature, humidity, illuminance, altitude, etc. The context information may be used to determine a customized image to be provided to the user from among synthetic images generated by the generative model. In the disclosure, real-time information is described as a main example of the context information, but context information other than the real-time information may be applied to the disclosure in the same/similar manner.

In operation S230, the electronic device 2000 may obtain a predefined prompt for image generation, based on the context information.

The predefined prompt may be text containing a description of what task the generative model is to perform. For example, the predefined prompt may be text that means "generate/edit the image to match the 'description'" and the generative model may generate/edit the image so that an output matches the description.

In an embodiment of the disclosure, the generative model may take the original image and the predefined prompt as input and output a synthetic image obtained by editing the original image according to the predefined prompt. In this case, the predefined prompt may not include a description of the synthetic image that the generative model is to generate, but include only an instruction related to image editing. The characteristics of the predefined prompt of the disclosure which are different from those of a prompt for an existing text-to-image generative model (hereinafter referred to as an 'existing generative model') are described.

To generate an image by using the existing generative model, a prompt containing a specific description of the image to be generated (e.g., "A straight road in snowy weather") needs to be input to the generative model. On the other hand, according to an embodiment of the disclosure, an original image and a predefined prompt (e.g., "Make it snowy") including an editing instruction may be input to the generative model, and the generative model may edit the original image according the instruction included in the predefined prompt and output a resulting image.

In an embodiment of the disclosure, the electronic device 2000 may obtain a predefined prompt based on the context information (e.g., real-time information). For example, the electronic device 2000 may obtain predefined prompts for modifying the time and/or weather in an image to correspond to the current time and/or weather based on time information and/or weather information.

Texts including predefined prompts may be stored in the electronic device 2000. The electronic device 2000 may obtain a collection of texts including one or more predefined prompts stored in the electronic device 2000. Each text included in the collection of texts may be a predefined text to create different variations of an image.

In an embodiment of the disclosure, the collection of texts may include human-written text. In an embodiment of the disclosure, the collection of texts may include text generated by a language model (e.g., a large language model (LLM)).

The electronic device 2000 may obtain a predefined prompt corresponding to the context information from the collection of texts including the predefined prompts stored in the electronic device 2000. However, obtaining, by the electronic device 2000, text corresponding to the context information is not limited to the above-described example. For example, the electronic device 2000 may directly generate an input prompt that is to replace the predefined prompt based on the context information, instead of obtaining the predefined text included in the collection of texts. In detail, real-time information from the context information may include time information and weather information, and when the real-time information includes 'night' and 'rainy', the electronic device 2000 may generate an input prompt such as "In rainy night". The electronic device 2000 may generate an input prompt by using a combination including at least one of the items included in the context information (e.g., season, weather, time, etc.). In this case, the electronic device 2000 may generate an input prompt in a rule-based manner or by using a language model.

In an embodiment of the disclosure, the electronic device 2000 may pre-generate various image variations. The electronic device 2000 may collectively obtain a plurality of predefined prompts included in the collection of texts in advance in order to pre-generate various image variations.

In addition, the "predefined prompt" referred to in operation S230 is data used as input data for the generative model. The term "predefined prompt" may be replaced with and referred to as various other terms representing the same/similar concept. For example, the predefined prompt may be replaced with other terms such as "instruction", "text instruction", "instruction statement", "editing instruction", "input text", "task query", "trigger sentence", "prompt", "message", etc., but is not limited thereto.

In operation S240, the electronic device 2000 may obtain display area information of a UI object displayed so as to be overlaid on the original image. Display area information may refer to information that defines an area within the screen for displaying a UI object. The display area information may be bounding box information that defines a quadrilateral area for displaying a UI object with coordinates. For example, the bounding box information may include coordinates [x1, y1, x2, y2] of top left and bottom right corners of the quadrilateral area. However, the display area information is not limited to bounding box information and may consist of various types of data that define polygonal areas, curved areas, etc. for displaying a UI object. The display area information may be used as input data for the generative model. In one or more examples, the display area may be determined based on one or more characteristics of an original image. For example, one or more conditions may specify setting a display area to be at a specific position of the original image having a luminance or brightness below a specific level.

In an embodiment of the disclosure, the electronic device 2000 may obtain property information of the UI object. The property information of the UI object may be stored in the electronic device 2000 or may be received from an external device (e.g., a server) that provides the UI object. The property information of the UI object may refer to information about display properties that allow the UI object to be visually displayed on the screen of the electronic device 2000. For example, the property information of the UI object may include display area information including a location and size of the UI object. Also, for example, the property information of the UI object may include color information of the UI object. Furthermore, for example, the property information of the UI object may include, but is not limited to, various types of data for changing display characteristics of the UI object, such as content, font, text effect, and style of the UI object. In addition to the appearance of the UI object, the property information may specify one or more sounds that are associated with the display of the UI object.

In an embodiment of the disclosure, the electronic device 2000 may obtain property information of the UI object and identify display area information indicating a location where the UI object is to be displayed from among the property information of the UI object.

In an embodiment of the disclosure, the electronic device 2000 may not obtain all of the property information of the UI object, but may obtain only the display area information of the UI object.

In addition, the term "UI object" may be replaced with and referred to as various other terms representing the same/similar concept. For example, the UI object may be replaced with other terms such as "widget", "information display object", "UI entity", "UI component", "UI element", "visual element", and "visual component", but is not limited thereto.

In operation S250, the electronic device 2000 may generate a modified image corresponding to the context information by applying the original image, the predefined prompt, and the display area information as input data to the generative model.

In an embodiment of the disclosure, the generative model may be trained to perform a text-based image editing task such that text is reflected in the image while maintaining image consistency. The generative model may take the image and text as an input and output one or more synthetic images. A synthetic image may refer to synthetic data generated by the generative model, and may include at least one feature of the input image.

Image consistency refers to consistency between the input image and the output image (synthetic image) of the generative model, and may be, for example, when the two images have the same image composition indicating the placement of elements within the image, but is not limited thereto.

The generative model may generate various image variations by editing the image. For example, the generative model may generate synthetic images that change the time, weather, season, color, contrast, saturation, mood, style, etc. of the image.

In an embodiment of the disclosure, a modified image is a concept included in the synthetic images. Among the synthetic image(s) generated by the generative model, a synthetic image modified to correspond to the context may be referred to as a modified image. In other words, an image that the electronic device 2000 finally provides to the user as a result of modifying the original image may be referred to as a modified image. Furthermore, a modified image may also be referred to as a customized image.

In an embodiment of the disclosure, the electronic device 2000 may obtain the modified image by inputting, to the generative model, the original image and the predefined prompt corresponding to the context information. When the original image and the predefined prompt corresponding to the context information are input to the generative model, the synthetic image output by the generative model may include content corresponding to the context information. Accordingly, the electronic device 2000 may determine the synthetic image output from the generative model to be a modified image (customized image). In other words, when the predefined prompt corresponding to the context information is input to the generative model, the synthetic image output from the generative model also has a context corresponding to the context information.

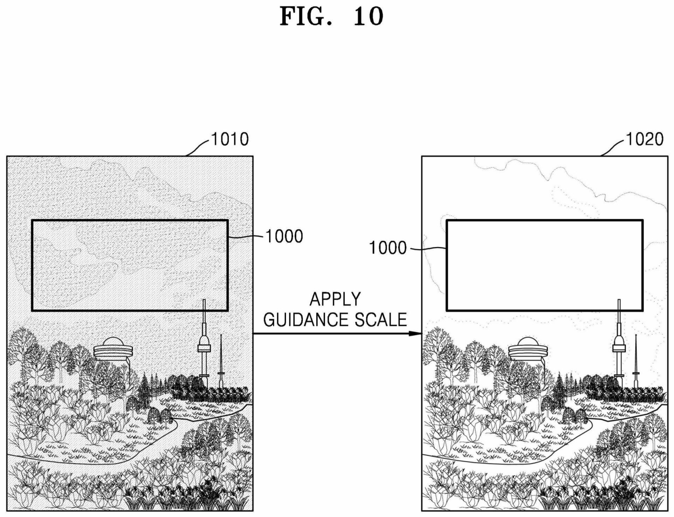

In an embodiment of the disclosure, the electronic device 2000 may apply, as input data to the generative model, the display area information indicating the area where the UI object is displayed and a parameter for adjusting the degree to which the predefined prompt is reflected in the synthetic image. In this case, within the modified image that is the output of the generative model, the degree to which the predefined prompt is reflected may differ between the display area and the remaining areas other than the display area. For example, the UI object may be a widget. In this case, the degree to which the predefined prompt is reflected may differ between a widget region and a non-widget region. An operation in which the electronic device 2000 adjusts the degree of reflection of a prompt through a parameter is further described in the description with respect to FIG. 10.

In an embodiment of the disclosure, the electronic device 2000 may generate a plurality of synthetic images by using the generative model, and determine a modified image (e.g., a customized image) from among the synthetic images based on the context information. In other words, the modified image may be selected from among the synthetic images generated by the generative model. The electronic device 2000 may obtain a plurality of predefined prompts included in the collection of texts and pre-generate synthetic images by changing the original image according to the plurality of predefined prompts. The electronic device 2000 may obtain the pre-generated synthetic images as candidate images and determine the modified image from among the candidate images.

The electronic device 2000 may determine, from among pre-generated synthetic images, a synthetic image that matches or is similar to the context information as a modified image. For example, the electronic device 2000 may select a synthetic image corresponding to real-time information from the context information. In this case, synthetic images generated by the generative model may include various types of variations that are to match the real-time information. For example, synthetic images may be time variations of the input image, which are obtained by changing times of day in the input image. In detail, the synthetic images may include images obtained by changing the times of day in the input image to dawn, morning, noon, afternoon, evening, night, etc. Based on current time information included in the real-time information, the electronic device 2000 may select an image corresponding to the current time from among the synthetic images. In one or more examples, the synthetic images may be a temperature variation of the input image, which are obtained by changing a temperature of the input image (e.g., change brightness level from bright to dull to indicate cooler temperatures).

In an embodiment of the disclosure, the electronic device 2000 may determine a modified image (e.g., a customized image) based on predefined conditions. For example, the electronic device 2000 may calculate evaluation scores for the synthetic images. An evaluation score may include, for example, a similarity score between a synthetic image and text (e.g., a predefined prompt), and an aesthetic score for the synthetic image, but is not limited thereto. The electronic device 2000 may determine, from among the synthetic images, an image having an evaluation score greater than or equal to a threshold value and matching the context information, as the modified image.

In an embodiment of the disclosure, the electronic device 2000 may determine a modified image based on a user input. For example, the electronic device 2000 may display, on the screen, a plurality of synthetic images that match the context information from among the synthetic images as candidate images for the modified image. The electronic device 2000 may determine an image selected from among the candidate images as the modified image.

In an embodiment of the disclosure, a plurality of texts may correspond to a single image that is input data for the generative model. Furthermore, there may be one or more synthetic images that are the output corresponding to a single image-text input. For example, the generative model may take an image and a first text as input and output one or more first synthetic images. Also, for example, the generative model may take the image and a second text as input and output one or more second synthetic images.

In an embodiment of the disclosure, the generative model may be implemented using various deep neural network architectures and algorithms of generative Al for processing input data to generate new data, or may be implemented through modifications to the various deep neural network architectures and algorithms of generative AI. The generative model may be, for example, an image generative model. In detail, the generative model may be a type of diffusion model that learns image features through a diffusion process that involves adding noise to the original image step by step and a reverse diffusion process that involves reconstructing the original image by removing noise from a noisy image (or by denoising the noisy image), but is not limited thereto.

In addition, the term "synthetic image" may be replaced with and referred to as various other terms representing the same/similar concept. For example, the synthetic image may be replaced with other terms such as "generated image," "edited image," "altered image," "new image," "candidate image," "image variation," etc., but is not limited thereto.

In addition to the example of time variations described above, the synthetic images may include various variations obtained so as to match the context information. For example, the synthetic images may include weather variations generated by changing the weather in the input image and seasonal variations generated by changing the season in the input image.

The synthetic images may include, in addition to the examples described above, various variations obtained so as to match the context information. The context information may include information representing various contexts related to the user, such as ambient temperature, humidity, illumination, altitude, user's emotions, activities, life routine, health, etc. Accordingly, the synthetic images may include various variations generated by changing image properties such as color, contrast, saturation, mood, and style to match the context information.

The examples of image variations described above are not independent of one another, and all possible combinations of the examples may be used. For example, the synthetic images may be a combination of at least two or more of the time variation, weather variation, seasonal variation, and other context variations.

Moreover, the term "modified image" may be replaced with and referred to as various other terms representing the same/similar concept. The modified image may be replaced with, for example, other terms such as "user-customized image," "customized image," "final image," "selected image," "personalized image," "final background image," "final wallpaper," "Al generated image," etc., but is not limited thereto.

In operation S260, the electronic device 2000 may display the customized image and the UI object as a background screen by overlaying the UI object on the customized image.

The electronic device 2000 may provide a customized screen including the modified image and the UI object. The UI object refers to a graphical interface element displayed on the screen of the electronic device 2000. For example, the UI object may be displayed on a portion of the entire screen of the electronic device 2000 so that only some functions of an application and/or program may be performed. The UI object may be a software component that displays information provided by an application and/or program, or provides functionality that allows the user to interact with the application and/or program (e.g., touch and click to perform an action).

In an embodiment of the disclosure, the customized screen may further display additional information related to the context information. For example, the additional information may be of text type. Additional information of text type may be referred to as contextual text. For example, the contextual text may include text representing a description of a given environment and/or situation, or text representing additional information related to the environment/situation, etc. However, the additional information is not limited to a text type. The additional information may be other types of data, such as images, icons, audio, etc. For example, a microphone of the electronic device 2000 may be used to capture audio that indicates a surrounding environment of the user (e.g., audio of multiple voices may indicate that a user is in a large crowd).

In addition, the term "customized screen" may be replaced with and referred to as various other terms that represent the same/similar concept. The customized screen may be replaced with, for example, "context-tailored screen," "user-customized screen," "customized background screen," "customized wallpaper," "personalized screen," "personalized background screen," "personalized wallpaper," "context-adaptive screen," etc., but is not limited thereto.

In an embodiment of the disclosure, the electronic device 2000 may change the UI object displayed on the screen of the electronic device 2000 by changing property information of the UI object.

For example, the electronic device 2000 may change properties of the UI object based on the property information of the UI object and the modified image. The modified image is one of the image variations generated by the generative model. In other words, as the image changes, characteristics of the image, such as color, contrast, saturation, mood, style, etc., change. Accordingly, the properties of the UI object to be displayed so as to be overlaid on the modified image may also need to be changed.

The electronic device 2000 may change, based on the feature information of the modified image, the property information of the UI object, including at least one of a location, a size, a color, a font, a text effect, or a style of the UI object. The electronic device 2000 may maintain or improve the readability and visibility of the UI object by changing the property information of the UI object to be displayed so as to be overlaid on the modified image.

The electronic device 2000 may provide a customized screen by displaying the modified image and the UI object altered to suit the modified image, by overlaying the UI object on the modified image.

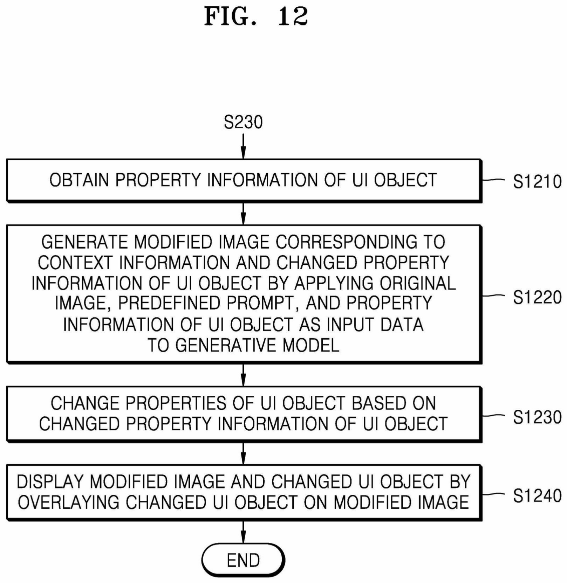

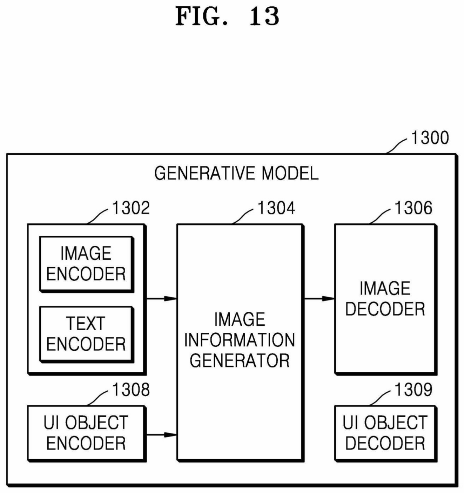

In another example, the electronic device 2000 may change the property information of the UI object by using the generative model. In this case, in addition to generating a synthetic image based on image-text, the generative model may be a model trained to take the property information of the UI object as an input and output changed property information of the UI object. The generative model capable of changing the property information of the UI object is described below with reference to FIGS. 12 and 13.

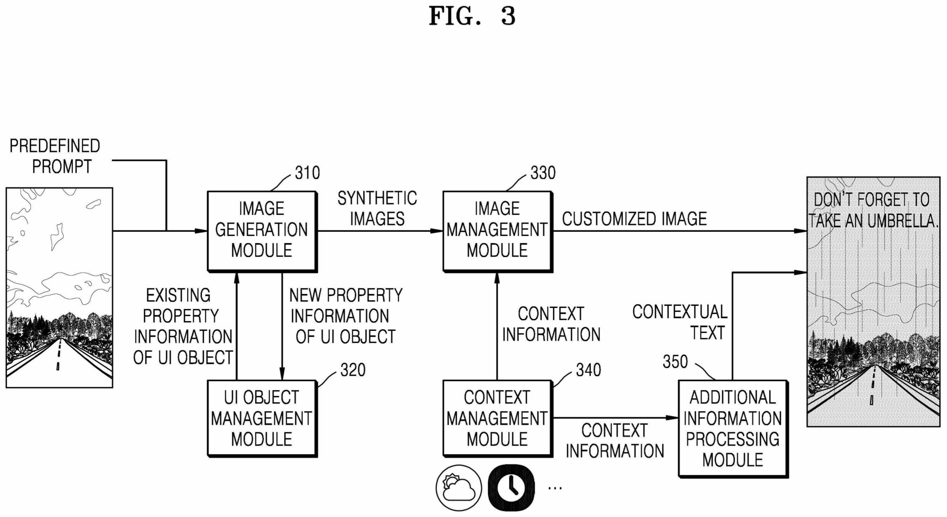

FIG. 3 illustrates an operation of an electronic device according to an embodiment of the disclosure.

Referring to FIG. 3, the electronic device 2000 may include at least an image generation module 310, a UI object management module 320, an image management module 330, a context management module 340, and an additional information processing module 350. Each module may consist of a combination of a series of code (e.g., one or more instructions) and data for implementing a specific function. Each module may process operations corresponding to some of the tasks performed by the electronic device 2000 to provide a customized screen. Each module may interact with each other by transmitting and receiving data there between. A processor of the electronic device 2000 may process tasks corresponding to the functions of each module by executing instructions of code constituting the module. The functions of each module are described.

The image generation module 310 may generate synthetic images that are variations of an input image by using a generative model. The image generation module 310 may perform a text-based image editing task by receiving as input an image and text including an a predefined prompt to be input to the generative model for the image. As a result, synthetic images that are various image variations may be generated.

In an embodiment of the disclosure, the text including the predefined prompt may be stored in the electronic device 2000. Texts may be predefined to generate different variations of the image. In detail, the texts may include predefined instructions that change a context of the image to match items of context information related to the user (e.g., time, weather, season, etc.). For example, the text may indicate a change in time, a change in weather, a change in season, etc., but is not limited thereto. For example, the text may be an instruction such as: "Change the image based on the weather information."

The UI object management module 320 may manage a property information of a UI object. For example, the UI object management module 320 may identify or update the property information of the UI object.

In an embodiment of the disclosure, the UI object management module 320 may provide an existing property information of the UI object to the image generation module 310. The image generation module 310 may use the property information of the UI object when generating the synthetic images. For example, the image generation module 310 may adjust, based on the property information of the UI object, the degree to which the text is reflected in a region corresponding to a UI object region within a synthetic image. Alternatively, for example, while generating a synthetic image based on the property information of the UI object, the image generation module 310 may generate new property information of the UI object that is changed to correspond to image characteristics of the synthetic image. The image generation module 310 may provide the new property information of the UI object to the UI object management module 320.

In an embodiment of the disclosure, the UI object management module 320 may manage a UI object displayed on the screen of the electronic device 2000. In this case, the UI object displayed on the screen of the electronic device 2000 may be managed according to the property information of the UI object.

The image management module 330 may determine, from among the synthetic images, a modified image (a customized image) to be provided to the user. The image management module 330 may receive real-time information and/or context information related to the user from the context management module 340. The image management module 330 may determine, from among the synthetic images that are variations of the original image, a synthetic image that matches or is similar to the context information as being a customized image. For examples, the plurality of synthetic images may specify images of different temperatures (e.g., 10 degrees, 20 degrees, 30 degrees), where the synthetic image with the temperature corresponding to the weather information is selected. For example, if the weather information indicates that a current temperature is 23 degrees, the synthetic image associated with 20 degrees is selected since this synthetic image is the closest to the weather information.

In an embodiment of the disclosure, the image management module 330 may cause the customized image to be displayed on the screen of the electronic device 2000.

The context management module 340 may obtain and manage various types of context information related to the user. Context information may include real-time information including time information and weather information. In an embodiment of the disclosure, the context information may be obtained using sensors (e.g., a global positioning system (GPS) sensor, an inertial measurement unit (IMU) sensor, a temperature sensor, a light sensor, etc.) included in the electronic device 2000. In an embodiment of the disclosure, the context information may be received from an external device (e.g., a server, a wearable device, etc.) communicatively connected to the electronic device 2000. In an embodiment of the disclosure, the context information may be input by the user (text input, voice input, etc.). The context management module 340 may store context information obtained in various ways and update the context information to a latest status in real time.

The additional information processing module 350 may process various types of additional information that may be displayed on the customized screen. The additional information processing module 350 may receive context information from the context management module 340. The additional information processing module 350 may generate data, such as text, icons, audio, etc. related to the context, based on the context information, and provide additional information on the customized screen. For example, the additional information processing module 350 may generate contextual text by summarizing or reconstructing the context information. Specifically, for example, when the context information includes the current weather "rainy", contextual text "Don't forget to take an umbrella" may be generated.

In an embodiment of the disclosure, the additional information processing module 350 may cause the additional information to be displayed on the screen of the electronic device 2000.

Moreover, the modules illustrated in FIG. 3 are an example for explaining an operation in which the electronic device 2000 provides the customized screen. A module may be subdivided into a plurality of modules distinguished according to its detailed functions, and some of the above-described modules may be combined to form a single module. For example, because the UI object may be considered a type of additional information, the UI object management module 320 and the additional information processing module 350 may be implemented as a single module.

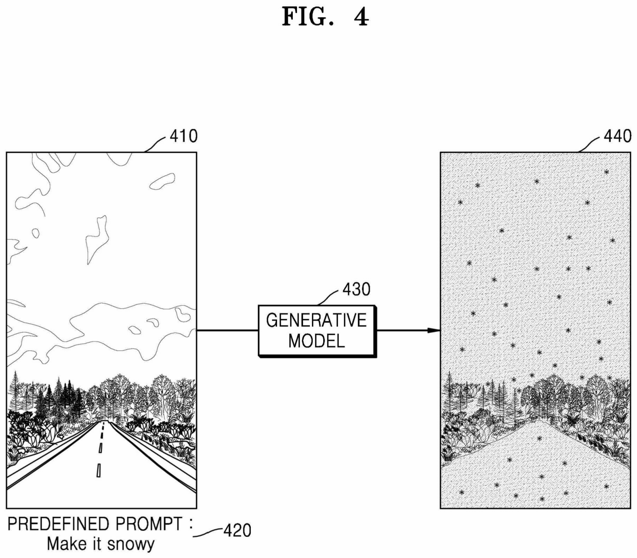

FIG. 4 is a diagram illustrating inference by a generative model, according to an embodiment of the disclosure.

Referring to FIG. 4, the electronic device 2000 may perform an inference operation by using a generative model 430. The electronic device 2000 may input an original image 410 and a predefined prompt 420 to the generative model 430 and obtain a synthetic image 440 output from the generative model 430. In this case, the synthetic image 440 may include at least one feature of the original image 410. For example, the synthetic image 440 may include features included in the original image 410, such as placement of elements such as a background, objects, etc. in the original image 410. In other words, image consistency may be maintained between the original image 410 and the synthetic image 440. For example, if the original image 410 is a scene of a forest of trees, the synthetic image 440, even if a variation of the original image 410, will maintain these features for image consistency.

In an embodiment of the disclosure, the generative model 430 edits the original image 410 based on the predefined prompt 420. For example, the predefined prompt 420 may be the text "Make it snowy." In this case, the generative model 430 may generate the synthetic image 440 that is a variation of the original image 410 based on the predefined prompt 420. In detail, when the original image 410 is an image of sunny weather, the synthetic image 440 may be an image in which only the weather in the original image 410 is changed to snowy weather.

In an embodiment of the disclosure, there may be one or more predefined prompts 420. The electronic device 2000 may store a collection of texts including the one or more predefined prompts 420. The one or more predefined prompts 420 included in the collection of texts may be predefined text for creating various variations of the image. For example, various texts, such as "Make it snowy" for a first predefined prompt and "Make it rainy" for a second predefined prompt, may be predefined to change the context of the image.

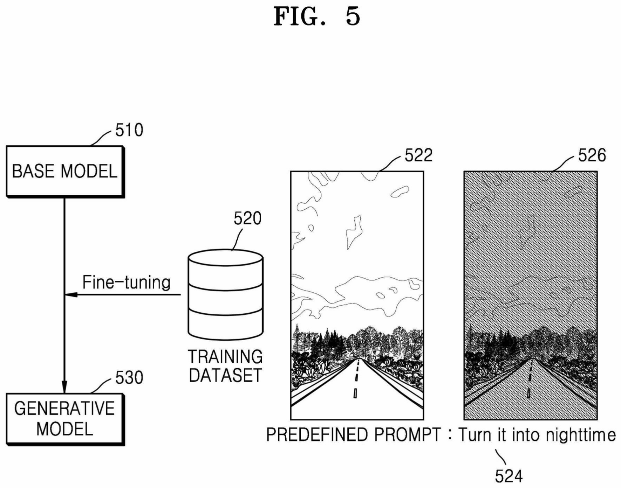

FIG. 5 is a diagram illustrating training of a generative model according to an embodiment of the disclosure.

Referring to FIG. 5, the electronic device 2000 may obtain a generative model 530 through a training process including a series of operations using a training dataset 520. The generative model 530 may be trained to perform a text-based image editing task such that text is reflected in an image while maintaining image consistency.

In an embodiment of the disclosure, the electronic device 2000 may obtain a base model 510. The base model 510 may be a model trained to take a prompt (text) as input and generate and output an image, and may also be referred to as a pre-trained generative model. The prompt may include a text description of an image to be generated. For example, when the prompt is "a painting of an apple in the style of Van Gogh," the base model 510 may generate an image corresponding to the prompt. The electronic device 2000 may obtain the base model 510 and then fine-tune the base model 510 with the training dataset 520 to obtain the generative model 530.

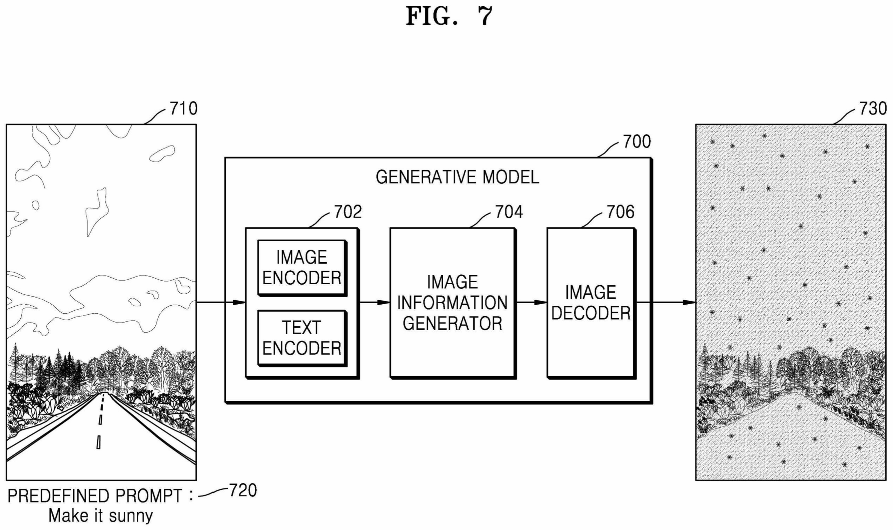

In an embodiment of the disclosure, the base model 510 and the generative model 530 may be implemented using deep neural network architectures and algorithms of generative Al for processing input data to generate new data, or may be implemented through modifications to the deep neural network architectures and algorithms of generative AI. The structure of the base model 510 and the generative model 530 is further described in the description with respect to FIG. 7.

In addition, the training dataset 520 for fine-tuning the base model 510 may be stored in the electronic device 2000. The electronic device 2000 may train the generative model 530 by using the training dataset 520. The training dataset 520 may include an existing image 522, a predefined prompt 524, and a new image 526. The generative model 530 may be trained to output the new image 526 based on the existing image 522 and the predefined prompt 524. For example, when the predefined prompt 524 is the text "Turn it into nighttime", training data may consist of the predefined prompt 524 "Turn it into nighttime", the existing image 522, and a new image 526 obtained by changing the time in the existing image 522 to nighttime. In other words, the training dataset 520 may include multiple training data, each consisting of {existing image 522, predefined prompt 524, and new image 526}.

In an embodiment of the disclosure, the electronic device 2000 may perform inference by using the trained generative model 530. When performing an inference operation, the generative model 530 may take an original image and a predefined prompt as input and output a synthetic image that still includes features of the input original image but is obtained by changing the original image based on the predefined prompt.

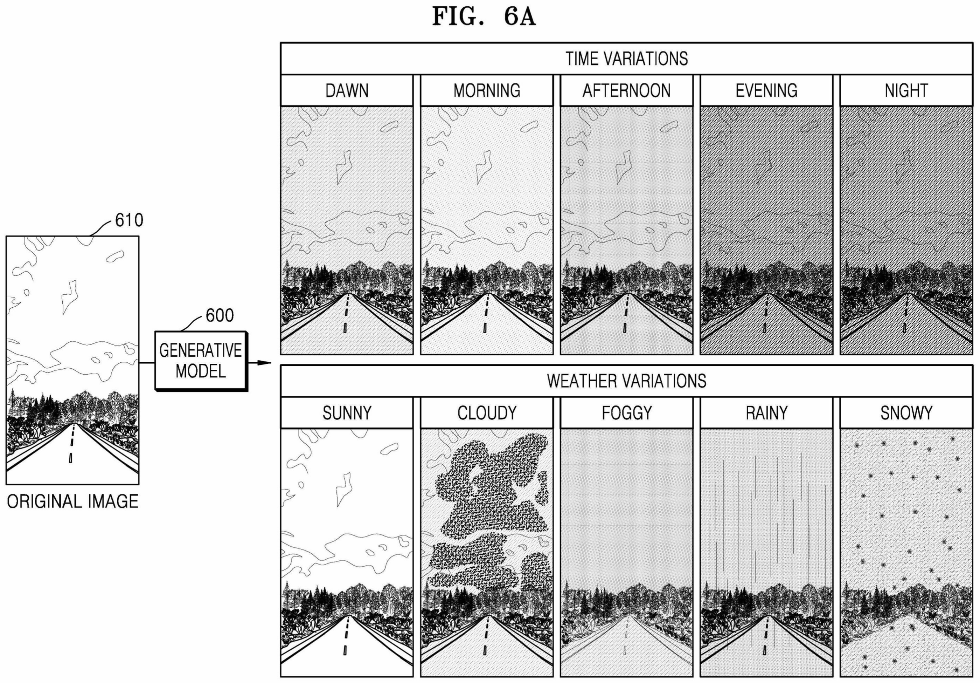

FIG. 6A is a diagram illustrating image variations generated by an electronic device, according to an embodiment of the disclosure.

In an embodiment of the disclosure, the electronic device 2000 may generate various variations of an original image by using a generative model.

For example, the electronic device 2000 may generate synthetic images corresponding to time variations of an original image 610 by using a generative model 600. The electronic device 2000 may input the original image 610 and a predefined prompt for time variation to the generative model 600 and obtain a synthetic image. There may be one or more predefined prompts.

In detail, for example, the electronic device 2000 may input the original image 610 and a first predefined prompt to the generative model 600 to obtain a dawn image that is a time variation of the original image 610. In the same manner, the electronic device 2000 may obtain a morning image by inputting the original image 610 and a second predefined prompt to the generative model 600, and obtain synthetic images corresponding to afternoon, evening, and night by respectively using a third predefined prompt, a fourth predefined prompt, and a fifth predefined prompt.

In a manner similar to the above-described example, the electronic device 2000 may generate synthetic images corresponding to another type of variation in addition to the time variation. For example, the electronic device 2000 may obtain synthetic images corresponding to sunny, cloudy, foggy, rainy, and snowy, which are weather variations of the original image 610. Furthermore, the electronic device 2000 may use the generative model 600 to generate various image variations by changing the season, contrast, saturation, mood, style, etc. of the original image 610.

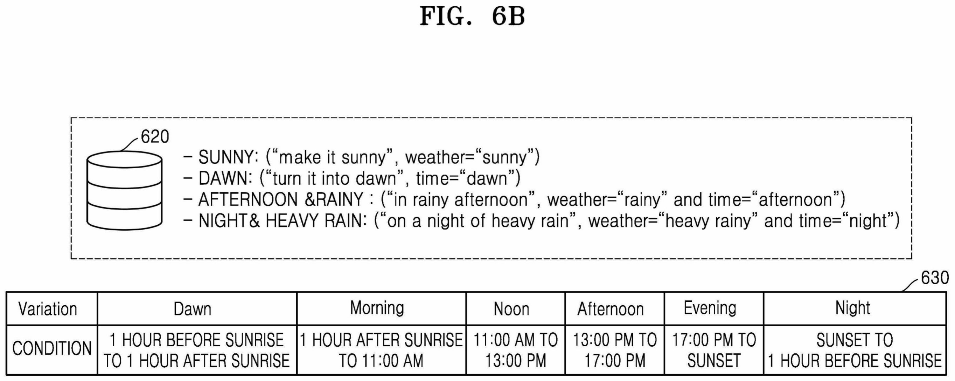

In an embodiment of the disclosure, when the original image 610 is obtained, the electronic device 2000 may obtain one or more predefined prompts for image variations. The one or more predefined prompts may be stored in the electronic device 2000. Predefined prompts for image variations are further described with reference to FIG. 6B.

FIG. 6B is a diagram illustrating predefined prompts for image variations, which are used by an electronic device, according to an embodiment of the disclosure.

In an embodiment of the disclosure, the electronic device 2000 may store a text collection 620 including texts for generating various variations of an image. The text collection 620 may include predefined prompts and values (e.g., keywords) that are accessible on the electronic device 2000. In one or more examples, the text collection 620 may be downloaded from a remote database that contains a large text collection, where the text collection 620 stored on the electronic device 2000 is a subset of the large text collection. In one or more examples, instead of storing a text collection 620 on the electronic device 2000, the electronic device 2000 may access the remote database to obtain a text prompt.

The text collection 620 may include predefined prompts for generating image variations and accessible values for accessing those image variations. For example, the text collection 620 may include a pair of a predefined prompts for generating a weather variation of the image and a corresponding accessible value {"make it sunny", weather="sunny"}. The text collection 620 may also include a pair of a predefined prompts for generating a time variation of the image and a corresponding accessible value {"turn it into dawn", time="dawn"}. The text collection 620 may also include pairs of predefined prompts for generating weather and time variations of the image and their corresponding accessible values {"rainy afternoon", weather="rainy" and time="afternoon"} and {"on a night of heavy rain", weather="heavy rainy" and time="night"}.

In an embodiment of the disclosure, the electronic device 2000 may generate image variations by inputting the original image and the predefined prompts included in the text collection 620 to a generative model.

In an embodiment of the disclosure, the electronic device 2000 may store predefined conditions to correspond to various variations of the image.

For example, referring to table 630, conditions corresponding to time variation may be defined. Accordingly, time ranges respectively corresponding to dawn, morning, noon, afternoon, evening, night, etc. may be defined as elements of the time variation. In this case, the respective conditions may be defined to be mutually exclusive so that multiple conditions are not simultaneously satisfied (e.g., contradicting conditions are avoided). In detail, the conditions corresponding to the time variation, such as a dawn time range (1 hour before sunrise to 1 hour after sunrise), a morning time range (1 hour after sunrise to 11:00 am), a noon time range (11:00 am to 13:00 pm), an afternoon time range (13:00 pm to 17:00 pm), an evening time range (17:00 pm to sunset), and a night time range (sunset to 1 hour before sunrise), may be defined to be mutually exclusive. Alternatively, preset time intervals such as 06:00 to 07:00, 07:00 to 08:00, etc. may be defined as elements of the time variation.

In a similar manner to the above-described example, the electronic device 2000 may have defined conditions corresponding to another type of variation in addition to the time variation. For example, conditions corresponding to seasonal variation, such as spring, summer, fall, winter, etc. may be defined as elements of the seasonal variation. Alternatively, conditions corresponding to weather variation, such as sunny, cloudy, foggy, rainy, snowy, etc. may be defined as elements of the weather variation. In an embodiment of the disclosure, elements of image variations may be defined at a finer level. For example, in the case of weather variation, rain may also be defined as light rain, heavy rain, etc. depending on the amount of precipitation. Furthermore, in addition to conditions corresponding to the time variation, seasonal variation, and weather variation, conditions corresponding to various other variations that include changes to the color, contrast, saturation, mood, style, etc. of the image may be defined and stored in the electronic device 2000.

In an embodiment of the disclosure, the electronic device 2000 may determine a customized image from among synthetic images based on predefined conditions. The electronic device 2000 may obtain context information related to the user, and determine a customized image based on the predefined conditions and the context information. For example, the context information may be real-time information. The electronic device 2000 may identify a current time from the real-time information, and identify a condition corresponding to the current time based on predefined conditions corresponding to time variation. The electronic device 2000 may select, based on the identified condition, a time variation image corresponding to the current time from among the synthetic images. In detail, when the current time is 11:30 am, the electronic device 2000 may identify, based on the predefined conditions, that the context information is included in the noon time range (11:00 am to 13:00 pm), and identify, based on the accessible value time="noon", an image corresponding to the noon time range among the synthetic images. The context may be based on a user's current location. For example, GPS data corresponding to the location of the electronic device 2000 may be used to specify a refined position of a user (e.g., latitude and longitude), where one or more predefined conditions are applied to the refined position of the user.

In an embodiment of the disclosure, context information may include real-time information, such as time, weather, season, etc., and ambient temperature, humidity, illuminance, altitude, user's emotions, activities, life routine, etc. The electronic device 2000 may determine a customized image appropriate for the user's current context based on predefined conditions and context information.

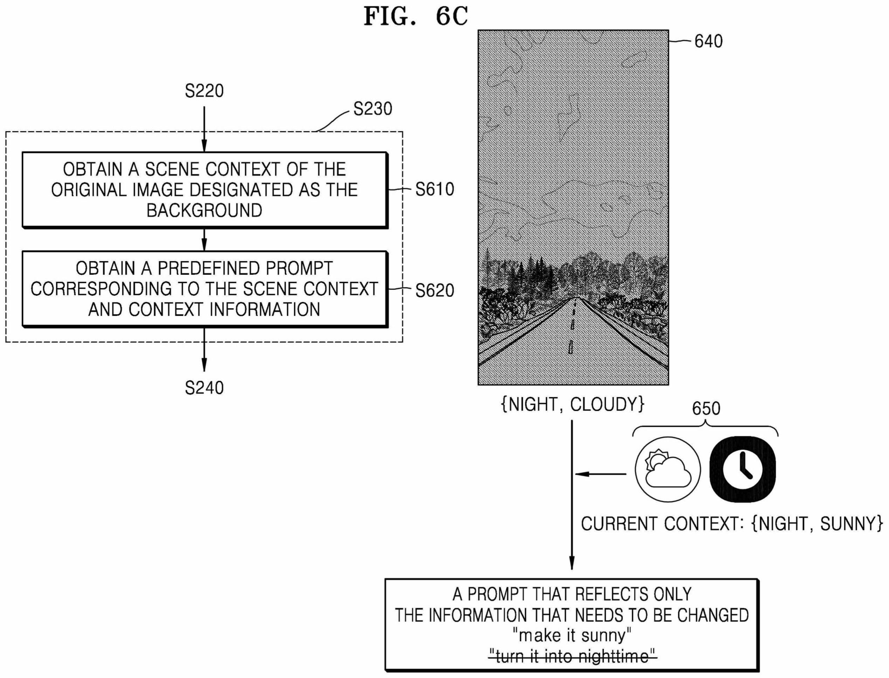

FIG. 6C is a diagram to illustrating an operation of an electronic device obtaining a predefined prompt, according to an embodiment of the the disclosure.

Referring to FIG. 6c, an example embodiment of operation S230 of FIG. 2 will be described. Thus, operation S610 and operation S620 may be performed after the electronic device 2000 has obtained the original image 640 designated as the background screen and has obtained context information 650 at the current location. With reference to FIG. 6c, the context information 650 includes, for example, current time information, current weather information, and current season information.

In operation S610, the electronic device 2000 may obtain a scene context of the original image 640 designated as the background. The scene context may refer to the current context within the image, and may be information that can be matched with the context information 650. For example, the scene context may include contextual information in the image that can be matched with the context information, such as weather in the image, time of day in the image, season in the image, etc.

For example, referring to the original image 640 acquired by the electronic device 2000, the original image 640 may already be an image having a context such as {night, cloudy}. The electronic device 2000 may obtain a scene context indicative of the context of the original image 640, and may obtain predefined prompt for editing the image based on the scene context.

In an embodiment, the electronic device 2000 may perform a scene analysis to obtain a scene context. The electronic device 2000 may use one or more artificial intelligence models different from the generative model for analyzing the scene. To obtain the scene context, the electronic device 2000 may use a scene analysis model, which is an artificial intelligence model. The scene analysis model may be a deep neural network model that takes an image as input and outputs information indicative of contexts within the image. For example, a scene analysis model may take the original image 640 as input and output {night, cloudy}, which is scene context information representing weather, time of day, season, etc. The scene analysis model may be implemented using various known deep neural network architectures and algorithms, or variations of various known deep neural network architectures and algorithms.

In an embodiment, the electronic device 2000 may obtain the scene context based on user input. For example, the electronic device 2000 may receive user input of the scene context {night, cloudy} of the original image 640.

In operation S620, the electronic device 2000 may obtain a predefined prompt corresponding to the scene context and context information 650 of the original image 640.

In an embodiment, the electronic device 2000 uses the generative model to edit the image so that the context information 650 is reflected in the original image 640. In an example, the current context information 650 may already be included in, or already reflected in, the scene context of the original image 640. In this case, the electronic device 2000 may obtain a prompt to apply only the remaining context information that is not included in the scene context, of the items included in the context information 650. In other words, the electronic device 2000 may obtain a prompt to instruct the electronic device 2000 to reflect only the information that needs to be changed, given the context of the original image 640.

In an embodiment, the items included in the context information 650 may be the time and weather. If the current time and/or current weather is already applied to the original image 640, the electronic device 2000 may obtain a prompt to apply only the remaining contextual information. For example, if the current time is a time zone that is already applied to the original image 640, the electronic device 2000 may obtain a prompt to apply only the weather information.

For example, the current time and current weather included in the context information 650 may be {night, clear}, and the scene context of the original image 640 may be {night, cloudy}. In this case, the time transform may be omitted because the time zone of the original image 640 is already nighttime. The electronic device 2000 may obtain the prompt "Make it sunny" for editing only the weather. The prompt may be predefined, or may be included in a collection of text stored in the electronic device 2000.

Also, for example, if the current weather is one that has already been applied to the original image 640, the electronic device 2000 may obtain a prompt to apply only the time information.

After operation S620, operation S240 to operation S250 of FIG. 2 may be performed. Alternatively, operation S1210 to operation S1240 of FIG. 12 may be performed.

FIG. 7 is a diagram illustrating a structure of a generative model according to an embodiment of the disclosure.

In an embodiment of the disclosure, the electronic device 2000 may generate a new image by using a generative model 700. The generative model 700 may take an original image 710 and a predefined prompt 720 as input and output a synthetic image 730.

The generative model 700 may include an encoder 702, an image information generator 704, and an image decoder 706. The generative model 700 may be obtained by fine-tuning a base model (e.g., pre-trained generative model). The base model may be an image generative model based on prompt (text) input. That is, the generative model 700 may be a model created to perform a specialized task (a text-based image editing task) by training the base model with additional data. Because descriptions related to data for training a generative model have already been provided in the description with respect to FIG. 5, the descriptions are omitted here for brevity.

The encoder 702 may include an image encoder and a text encoder. The image encoder may generate an image embedding(image embedding can also be referred to as image input data) by converting an image into a vector representation, and a text encoder may generate a text embedding(text embedding can also be referred to as text input data) by converting text into a vector representation. The encoder 702 may be trained to find relationships between text and images and generate vector representations representing features of the images and text. The encoder 702 may be implemented using a known neural network architecture capable of processing text and images, or through a variation of the known neural network architecture. For example, the encoder 702 may be implemented based on a contrastive language-image pre-training (CLIP) architecture, but is not limited thereto.

In an embodiment of the disclosure, when the original image 710 and the predefined prompt 720 are input to the generative model 700, the generative model 700 may generate an image embedding by converting the original image 710 into a vector representation via the image encoder, and generate a text embedding by converting the predefined prompt 720 into a vector representation via the text encoder. The image embedding and the text embedding may be transmitted to the image information generator 704.

The image information generator 704 may process the input data (the image embedding and the text embedding) during an inference process of the generative model 700 to generate a multidimensional information array that the image decoder 706 uses to generate an image. The image information generator 704 may process the image embedding and the text embedding so that the content of the predefined prompt 720 may be included while maintaining the features of the original image 710.

Moreover, during a training process of the generative model 700, the image information generator 704 may process a diffusion-reverse diffusion process. The training process of the generative model 700 may include, but is not limited to, a diffusion-reverse diffusion process which consists of a diffusion process of adding noise to an original image step by step and a reverse diffusion process of reconstructing the original image by removing noise from a noisy image (or by denoising the noisy image). Through the diffusion-reverse diffusion process, the generative model 700 is trained to add noise to the image step by step, and predict the amount of noise and remove the noise. The image information generator 704 may include a noise predictor for processing the reverse diffusion process. The noise predictor may be implemented using a known neural network architecture, or through modifications of the known neural network architecture. For example, the noise predictor may be implemented based on the U-Net architecture, but is not limited thereto. Furthermore, when the generative model 700 is trained to generate images from text, in order to find text-image relationships, an attention mechanism (e.g., cross-attention) may be used to merge text embeddings, which are obtained by converting prompts (texts), into images to which noise is added stepwise. In addition, in order to have a newly generated image region naturally match with the surrounding image regions, an attention mechanism (e.g., self-attention) that assigns different weights to different locations within input data may be used.

The image information generator 704 may process input data (embeddings) to generate a multidimensional information array (tensor) used to generate an image. The image decoder 706 may convert the tensor output from the image information generator 704 to output the synthetic image 730.

In an embodiment of the disclosure, a classifier-free guidance (CFG) technique may be applied to the generative model 700. In an example of training the generative model 700 to generate an image from text among multiple training conditions, the training of the generative model 700 may proceed by randomly dropping out a condition in which text is given during the training process of the generative model. Accordingly, image generation by the generative model 700 may be guided by adjusting a trade-off between a conditional likelihood, which is the probability of generating an image when text is given, and an unconditional likelihood, which is the probability of generating an image without text.

In an inference operation of the generative model 700 trained by applying the CFG technique, a guidance scale s for CFG may be used as an input parameter. The higher the value of a guidance scale that is input, the greater the degree and likelihood that the generative model 700 reflects the predefined prompt 720, but the quality of an image may deteriorate. When a smaller value of the guidance scale is input, the quality of images generated by the generative model 700 may increase, but the degree of reflection of the predefined prompt 720 may decrease. An embodiment in which the guidance scale is utilized is further described in the description with respect to FIG. 10. In one or more examples, the guidance scale input may be correlated with a first degree corresponding to a degree in which the predefined prompted is reflected in a display area of a UI object, and a second degree corresponding to a degree in which the predefined prompt is reflected in remaining areas other than the display area.

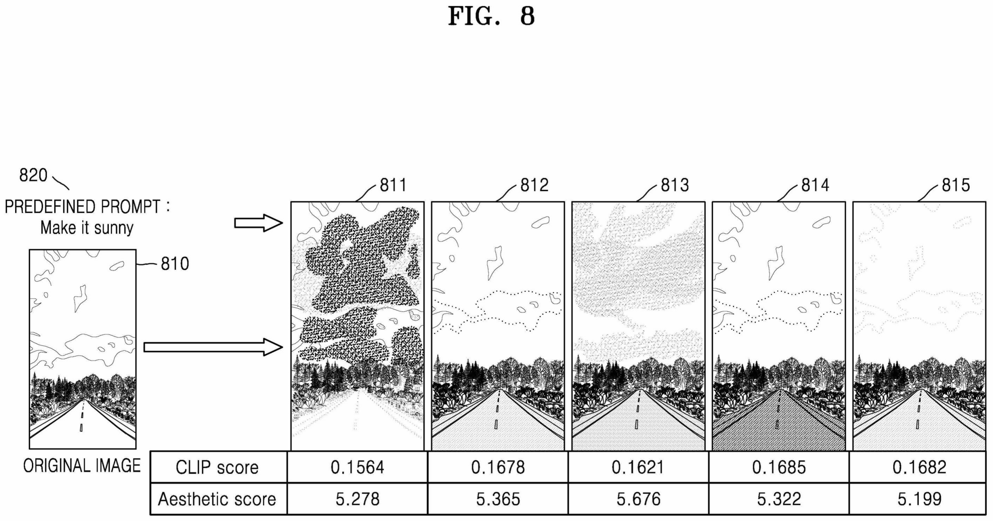

FIG. 8 is a diagram illustrating an operation in which an electronic device uses an evaluation score to determine a customized image, according to an embodiment of the disclosure.

In an embodiment of the disclosure, when the electronic device 2000 generates an image by using a generative model, an output may be different even when an input is the same due to the characteristics of the generative model. The electronic device 2000 may obtain a plurality pieces of different output data by repeating inputting the same input data to the generative model several times. Alternatively, the generative model may output a plurality of pieces of different output data for a single input.

For example, the electronic device 2000 may repeat inputting the same input data, i.e., the original image 810 and the predefined prompt 820, to the generative model five times. Alternatively, the generative model may produce five output results for one input. As a result, different outputs, i.e., a first synthetic image 811, a second synthetic image 812, a third synthetic image 813, a fourth synthetic image 814, and a fifth synthetic image 815 may be obtained from the generative model.

The electronic device 2000 may generate a plurality of synthetic images by using the generative model and calculate evaluation scores for the generated synthetic images. An evaluation score may include, for example, a similarity score (e.g., a CLIP score) between each synthetic image and the predefined prompt 820, and an aesthetic score for the synthetic image, but is not limited thereto. The calculation of an evaluation score may be implemented through a deep neural network model including one or more multi-layer perceptrons (MLPs), but is not limited thereto.

In an embodiment of the disclosure, the electronic device 2000 may determine, among the synthetic images, an image that has an evaluation score greater than or equal to a threshold value and matches context information (e.g., real-time information) as a customized image. In detail, in an example of FIG. 8, a threshold value for a similarity score may be 0.165, and a threshold value for an aesthetic score may be 5.3. Accordingly, the second synthetic image 812 and/or the fourth synthetic image 814, each having a similarity score and an aesthetic score that are greater than or equal to the threshold values therefor may be selected as final synthetic images.

Moreover, the electronic device 2000 may obtain various image variations by using one or more predefined prompts. For example, while FIG. 8 illustrate synthetic images corresponding to sunny, which is an example of weather variation, the electronic device 2000 may generate synthetic images corresponding to cloudy/foggy/rainy/snowy, etc., which are other weather variations, or generate synthetic images corresponding to other types of variations (e.g., time variation, etc.) in addition to the weather variation.

The electronic device 2000 may calculate evaluation scores for synthetic images obtained as a result of each of the image variations (weather variation, time variation, etc.) and determine final synthetic images as in the above-described example. The electronic device 2000 may select, from among the final synthetic images, an image that matches the context information (e.g., real-time information) as a customized image. For example, when the current weather is sunny based on real-time information, the second synthetic image 812 or the fourth synthetic image 814 may be determined as a customized image. In another example, when the current weather is cloudy based on real-time information, a customized image may be determined from among synthetic images generated to correspond to cloudy.

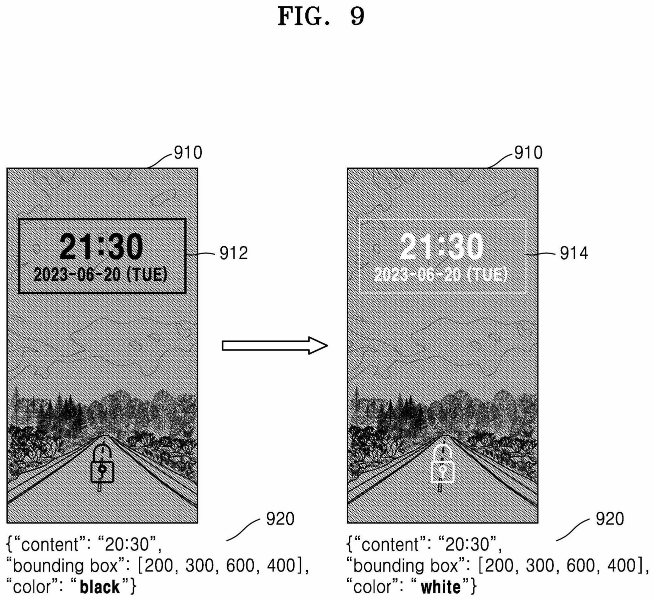

FIG. 9 is a diagram illustrating an operation in which an electronic device changes the properties of a UI object, according to an embodiment of the disclosure.

It is assumed in FIG. 9 that a customized image 910 has been determined according to the above-described embodiment. Furthermore, an example in which a UI object is a widget 912 is described.

In an embodiment of the disclosure, the electronic device 2000 may overlay the widget 912 on the customized image 910 and display a resulting image on the screen. That is, the electronic device 2000 may provide a customized screen including the customized image 910 and the widget 912.

The customized image 910 is one of the image variations generated by the generative model. In other words, as the image changes, characteristics of the image, such as color, contrast, saturation, mood , style, etc., change. Accordingly, the properties of the widget 912 displayed to be overlaid on the customized image 910 may also need to be changed.

For example, when the customized image 910 is an image corresponding to an evening time range, dark-colored pixels may be included in the customized image 910. When a display color of the widget 912 is black, the widget 912 overlaid on the customized image 910 may not be visible. The electronic device 2000 may change the color of the widget 912 to white and display the changed widget 914 to be overlaid on the customized image 910.

The electronic device 2000 may change the properties of the widget 912 based on widget property information 920 and the customized image 910.

In an embodiment of the disclosure, the electronic device 2000 may obtain the widget property information 920. The widget property information 920 may include various pieces of information related to the properties of the widget 912. For example, the widget property information 920 may include at least one of location information, size information, or color information of the widget 912. The location information and size information of the widget 912 may be bounding box information, but is not limited thereto. Also, for example, the widget property information 920 may include, but is not limited to, content, font, text effect, style, and function (e.g., click ability, etc.) of the widget 912.

In an embodiment of the disclosure, the electronic device 2000 may obtain image feature information by analyzing the customized image 910. The electronic device 2000 may analyze an image and obtain image feature information by using various known computer vision techniques. The image feature information may include, but is not limited to, image resolution, image classification, objects in the image, text in the image, image color information, etc. In an embodiment of the disclosure, the electronic device 2000 may identify image features of a widget region within the customized image 910.

The electronic device 2000 may change the widget property information 920, based on the image feature information of the customized image 910 and the widget property information 920. For example, the electronic device 2000 may change the color information in the widget property information 920 to a high-contrast color or complementary color to distinguish the color of the widget 912 from a color of the customized image 910.

FIG. 10 is a diagram illustrating an operation in which an electronic device adjusts the degree of reflection of a predefined prompt when generating a synthetic image, according to an embodiment of the disclosure.

The electronic device 2000 may input an original image and a predefined prompt to a generative model to obtain a synthetic image as a result. In this case, the synthetic image output from the generative model may reflect the content of the predefined prompt.

In an embodiment of the disclosure, the electronic device 2000 may adjust the degree to which the generative model reflects the predefined prompt in the synthetic image. The electronic device 2000 may obtain display area information of UI objects and, based on the display area information of the UI objects, adjust a scale for determining the degree to which the generative model reflects predefined prompts in display areas of the UI objects in synthetic images. Display area information of a UI object may be included in property information of the UI object.

For example, when a predefined prompt is "Make it cloudy," a synthetic image output from the generative model may appear like a first image 1010. In this case, objects such as clouds may also be created within a display area 1000 of a UI object, which is an area where the UI object is displayed within the first image 1010, and when the UI object is displayed, the readability and visibility of the UI object may be reduced due to the objects such as clouds. In this case, the electronic device 2000 may set the degree to which the predefined prompt is reflected to be low for the display area 1000 of the UI object, thereby increasing readability and visibility when the UI object is overlaid. The degree to which the predefined prompt is reflected in the display area may be referred to as a first degree. The degree to which the predefined prompt is reflected in remaining areas other than the display area may be referred to as a second degree.

When generating an image by using the generative model, the electronic device 2000 may use a guidance scale for CFG as an input parameter. The higher the value of the guidance scale that is input, the greater the degree to which the generative model reflects a predefined prompt, and the lower the value of the guidance scale that is input, the less the degree to which the generative model reflects the predefined prompt.

For example, when a predefined prompt is "Make it cloudy" and a guidance scale is used, a synthetic image output from the generative model may appear like a second image 1020. In this case, objects such as clouds are not created within a display area 1000 of a UI object where the UI object is displayed in the second image 1020, which may improve the readability and visibility of the UI object when the UI object is displayed. That is, the electronic device 2000 may identify location and size information of the UI object based on property information of the UI object, and adjust the guidance scale, which is a scale for determining the degree to which the generative model reflects the predefined prompt, for the display area 1000 of the UI object.

While FIG. 10 illustrates an example in which the electronic device 2000 applies the guidance scale to the display area 1000 of the UI object, the application of the guidance scale by the electronic device 2000 is not limited to the display area 1000 of the UI object. The electronic device 2000 may set the guidance scale differently for only a portion of the image, rather than the entire image area. Accordingly, when the electronic device 2000 generates an image by reflecting one predefined prompt therein, the degree of reflection of the predefined prompt may be set to be different for each region in the generated image. For example, the electronic device 2000 may adjust the degree to which the predefined prompt is reflected in an area where additional information is displayed. In other words, the electronic device 2000 may apply a guidance scale to the area where the additional information is displayed. In detail, the additional information may be a contextual text "Don't forget to take an umbrella." The electronic device 2000 may set the degree to which the predefined prompt is reflected in the area where the additional information is displayed to be low in order to improve the readability and visibility of the additional information. In another example, the electronic device 2000 may apply a first guidance scale to a first region and a second guidance scale to a second region. Accordingly, the degree to which a predefined prompt is reflected in each of the first region and the second region may vary.

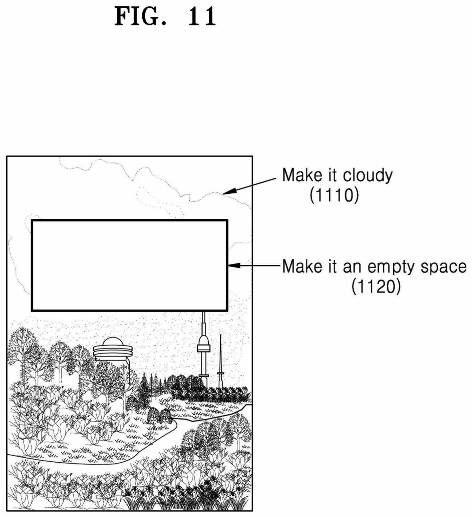

FIG. 11 is a diagram illustrating an operation in which an electronic device generates a synthetic image by using a plurality of predefined prompts, according to an embodiment of the disclosure.

The electronic device 2000 may input an original image and a predefined prompt to a generative model to obtain a synthetic image as a result. In this case, the content of the predefined prompt may be reflected in the synthetic image output from the generative model.

In an embodiment of the disclosure, the electronic device 2000 may allow two or more predefined prompts to be input to the generative model. The electronic device 2000 may cause different predefined prompts to be reflected in different regions of the original image. For example, a first predefined prompt may be reflected in the display area, and a second predefined prompt may be reflected in remaining areas other than the display area.

The electronic device 2000 may generate a synthetic image such that different predefined prompts are reflected in a plurality of regions of the original image. For example, the electronic device 2000 may input the original image, a first predefined prompt 1110, and a second predefined prompt 1120 to the generative model. The electronic device 2000 may cause the first predefined prompt 1110 "Make it cloudy" to be reflected in a first region of the original image and the second predefined prompt 1120 "Make it empty" to be reflected in a second region thereof. In the example of FIG. 11, the second region of the original image corresponds to a UI object region. Thus, the electronic device 2000 may make the UI object region empty when generating the synthetic image, thereby increasing the readability and visibility of a UI object when the UI object is displayed to be overlaid on the customized image.

While FIG. 11 illustrates an example in which the electronic device 2000 applies a separate predefined prompt to the UI object region, regions where the electronic device 2000 applies a plurality of predefined prompts are not limited to the UI object region. The electronic device 2000 may set different predefined prompts to be applied to a plurality of regions of the image. Accordingly, when generating a synthetic image, the electronic device 2000 may allow different predefined prompts to be reflected in different regions within the generated image.

FIG. 12 is a flowchart illustrating an operation in which an electronic device provides a customized screen, according to an embodiment of the disclosure.

Operations S1210 to S1250 of FIG. 12 may be performed after operations S210 to S230 of FIG. 2 have been performed.

In operation S1210, the electronic device 2000 may obtain property information of a UI object. The property information of the UI object may be stored in the electronic device 2000 or may be received from an external device (e.g., a server) that provides the UI object. The property information of the UI object may include various pieces of information related to properties of the UI object. For example, the property information of the UI object may include at least one of display area information of the UI object, which indicates a location and a size of the UI object, or color information. Also, for example, the property information of the UI object may include, but is not limited to, content, font, text effect, style, and function (e.g., click ability, etc.) of the UI object.

In operation S1220, the electronic device 2000 may apply the original image, the predefined prompt, and the property information of the UI object as input data to the generative model to thereby generate a modified image corresponding to the context information and changed property information of the UI object. The changed property information of the UI object may correspond to the modified image. In addition, the modified image may include at least one feature of the input original image.

In an embodiment of the disclosure, the electronic device 2000 may use the generative model capable of changing the property information of the UI object. In other words, the generative model may be a model trained to take as input the original image, the predefined prompt, and the property information of the UI object, and output a synthetic image that is a variation of the original image and the changed property information of the UI object that is optimized to correspond to image features of the synthetic image.

The generative model capable of changing the property information of the UI object may be another generative model that is different from the generative model used in operation S240 of FIG. 2. The structure of the generative model capable of changing the property information of the UI object is further described in the description of FIG. 13.

In an embodiment of the disclosure, the electronic device 2000 may obtain the modified image by using the predefined prompt corresponding to the context information as input data for the generative model. In other words, when the image, the predefined prompt corresponding to the context information, and the property information of the UI object are input to the generative model, the synthetic image and the changed property information of the UI object are output. In this case, the synthetic image output by the generative model may include content corresponding to the context information. Accordingly, the electronic device 2000 may determine the synthetic image output from the generative model to be a modified image (e.g., a customized image).

In an embodiment of the disclosure, the electronic device 2000 may determine a modified image from among synthesized images based on the context information. In this case, the changed property information of the UI object corresponding to the synthetic image determined as the modified image may also be obtained. In detail, the electronic device 2000 may obtain a plurality of predefined prompts included in a collection of texts and pre-generate synthetic images, which are variations of the original image obtained according to the plurality of predefined prompts, and changed property information of the UI object. The electronic device 2000 may select a synthetic image corresponding to the context information from among the pre-generated synthetic images.

In operation S1230, the electronic device 2000 may change properties of the UI object based on the changed property information of the UI object obtained from the generative model. The electronic device 2000 may cause the UI object to be changed to suit the modified image based on the property information of the UI object that has been changed to values optimized by the generative model.

In operation S1240, the electronic device 2000 may display the modified image and the changed UI object on the screen by overlaying the changed UI object on the modified image. The electronic device 2000 may provide a customized screen including the modified image and the changed UI object.

FIG. 13 is a diagram illustrating a structure of a generative model according to an embodiment of the disclosure.

The generative model 1300 of FIG. 13 is a generative model capable of changing property information of a UI object. The generative model 1300 may take as input an original image, a predefined prompt, and property information of a UI object, and output a synthetic image and changed property information of the UI object.

The generative model 1300 may include an encoder 1302, an image information generator 1304, an image decoder 1306, a UI object encoder 1308, and a UI object decoder 1309. Because the encoder 1302, the image information generator 1304, and the image decoder 1306 respectively correspond to the encoder 702, the image information generator 704, and the image decoder 706 in FIG. 7, descriptions already provided above are omitted herein.

The UI object encoder 1308 may generate an embedding by converting the property information of the UI object into a vector representation. The image information generator 1304 may process data output from the UI object encoder 1308 to generate a multidimensional information array that the UI object decoder 1309 uses to generate the changed property information of the UI object.

Moreover, the generative model 1300 may be obtained by training a base model and then fine-tuning the trained base model.

The base model may be a model trained to take a prompt (text) and property information of a UI object as input and output an image and changed property information of the UI object. In this case, a training dataset for training the base model may include multiple training data, each consisting of {prompt, image, existing property information of UI object, and changed property information of UI object}.

The electronic device 2000 may first train the base model in order to obtain the generative model 1300. During the training process of the base model, the image information generator 1304 is trained to generate an image from a prompt by learning a relationship between the prompt (text) and the image. Because this process has been described above in relation to the image information generator 1304 of FIG. 7, a description thereof is omitted herein. In addition, the image information generator 1304 is trained to change existing property information of the UI object by using changed property information of the UI object as ground truth data. The image information generator 1304 may include one or more layers and weights that enable the image information generator 1304 to process and change the property information of the UI object. During the training process of the base model, the values of weights used to process and change property information of UI objects may be optimized.

After the trained base model is obtained, the electronic device 2000 may create the generative model 1300 by using a training dataset for fine tuning. The generative model 1300 may be a model created to perform specialized tasks (e.g., a text-based image editing task and changing properties of the UI object) by training the base model with additional data. The training dataset for fine-tuning may include multiple training data, each consisting of {original image, synthetic image, existing property information of UI object, and changed property information of UI object}.

When the training of the generative model 1300 is completed, the electronic device 2000 may perform an inference operation by using the generative model 1300. The trained generative model 1300 may take as input an original image, a predefined prompt, and property information of a UI object, and output a synthetic image and changed property information of the UI object.

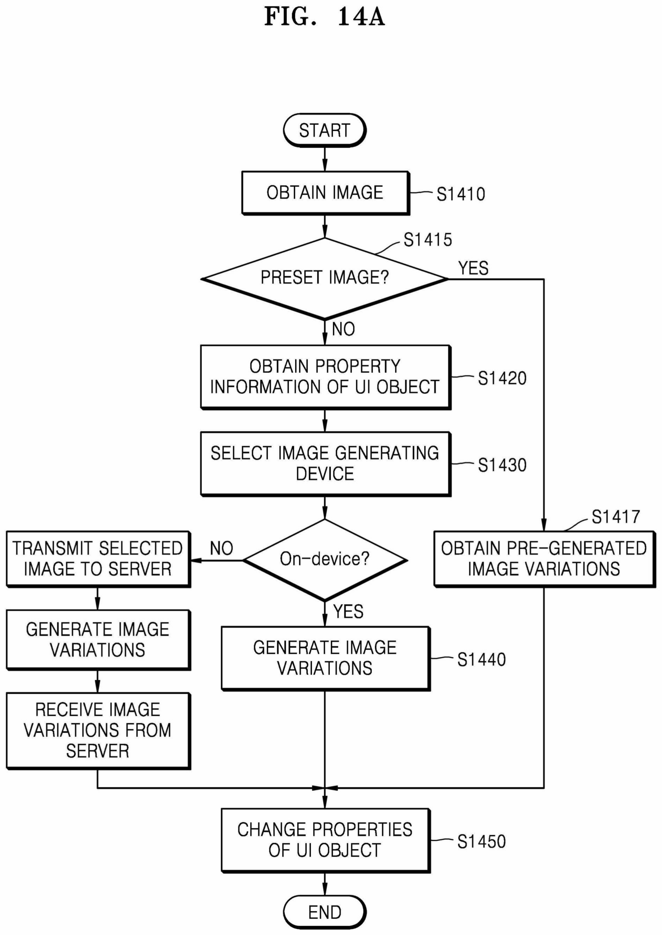

FIG. 14A is a flowchart illustrating an operation in which an electronic device generates synthetic images, according to an embodiment of the disclosure.

In operation S1410, the electronic device 2000 may obtain an image.

In an embodiment of the disclosure, the electronic device 2000 may use a preset image. The preset image may be an image stored in the electronic device 2000 and provided by default. For example, the preset image may be a lock screen image or a home screen image. In one or more examples, the preset image may be an image when a browser window is opened.

In an embodiment of the disclosure, the electronic device 2000 may receive a user input for selecting an image from one or more images stored in the electronic device 2000, or may obtain an image captured via a camera.

In operation S1415, the electronic device 2000 may identify whether the image is a preset image.

When the obtained image is the preset image, operation S 1417 may be performed. In operation S1417, the electronic device 2000 may obtain pre-generated image variations. The pre-generated image variations refer to synthetic images pre-generated by changing the preset image by using a generative model. The electronic device 200 may pre-generate synthetic images corresponding to various variations of a preset image by using a plurality of predefined prompts stored in advance.

When the obtained image is not a preset image, operation S1420 may be performed. In operation S1420, the electronic device 2000 may obtain property information of a UI object. The property information of the UI object may be used to allow the electronic device 2000 to display the UI object optimized for a customized image.

In operation S1430, the electronic device 2000 may select an image generating device. The electronic device 2000 may receive a user input for selecting an image generating device that is to perform a customized image generation operation. The image generating device that performs an image generation operation may be the electronic device 2000 or a server, but is not limited thereto. The image generating device may be a device capable of performing complex calculations and tasks using large-scale data, such as training, inference, management, and distribution of a generative model. The server may be a device having high computing performance to perform more calculations than the electronic device 2000 in order to operate the generative model. The server may perform training and/or inference of the generative model, which requires a large amount of computation, faster than the electronic device 2000.

When the electronic device 2000 is selected as the image generating device, operation S1440 may be performed. In operation S1440, the electronic device 2000 may generate image variations. The image variations refer to synthetic images obtained via a generative model.

In an embodiment of the disclosure, the electronic device 2000 may obtain synthetic images by inputting the obtained image (original image) and predefined prompts to a generative model (a first generative model).

In an embodiment of the disclosure, the electronic device 2000 may input the image (original image) obtained in operation S1410, predefined prompts, and property information of a UI object to a generative model (a second generative model) to thereby obtain synthetic images and changed property information of the UI object. The second generative model may also be referred to as a generative model capable of changing the property information of the UI object.

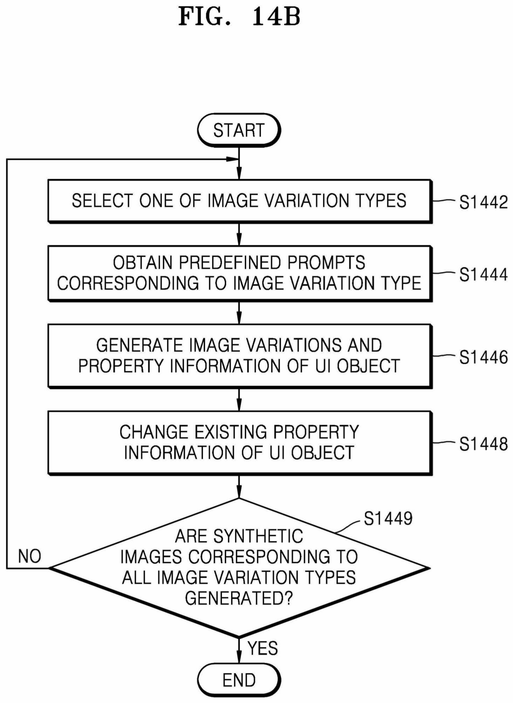

Because the operations of the first generative model and the second generative model have been described above with reference to the previous drawings, descriptions thereof are omitted herein. In addition, a specific operation in which the electronic device 2000 generates synthetic images by using the first generative model or the second generative model is further described with reference to FIG. 14B.

When the server is selected as the image generating device, an operation corresponding to operation S1440 may be performed by the server. The electronic device 2000 may transmit the image to the server, and the server may generate image variations by using the first generative model or the second generative model. The electronic device 2000 may receive the image variations from the server.

In operation S1450, the electronic device 2000 may change properties of a UI object.

In an embodiment of the disclosure, when the first generative model is used, the first generative model outputs only synthetic images. The electronic device 2000 may obtain image feature information by analyzing a synthetic image and change property information of the UI object based on the image feature information.

In an embodiment of the disclosure, when the second generative model is used, the second generative model outputs synthetic images and changed property information of the UI object.

The electronic device 2000 may change properties of the UI object based on the changed property information of the UI object.

FIG. 14B is a flowchart illustrating an operation in which an electronic device generates synthetic images, according to an embodiment of the disclosure.

Operations of FIG. 14B may be detailed operations of operation S1440 of FIG. 14A.

In operation S1442, the electronic device 2000 may select one of image variation types. The image variation types may be predefined. The image variation types may include time variation, weather variation, seasonal variation, etc., but are not limited thereto. An example in which time variation is selected from among the image variation types is described with reference to FIG. 14A.

In operation S1444, the electronic device 2000 may obtain predefined prompts corresponding to the image variation type.

The electronic device 2000 may obtain a collection of texts stored in the electronic device 2000. The collection of texts may contain predefined prompts for changing the image. For example, when the time variation is selected among the image variation types, the electronic device 2000 may obtain predefined prompts for changing the time of day in the image. The predefined prompts corresponding to the time variation may include instructions for changing the time of day in the input image (the original image) to dawn, morning, noon, afternoon, evening, night, etc.

In operation S1446, the electronic device 2000 may generate image variations and property information of the UI object.

In an embodiment of the disclosure, the electronic device 2000 may generate synthetic images corresponding to the time variation, which is the selected image variation type, by using the first generative model. The electronic device 2000 may obtain image feature information by analyzing a synthetic image and generate new property information of the UI object based on the image feature information.

In an embodiment of the disclosure, by using the second generative model, the electronic device 2000 may generate synthetic images corresponding to the time variation, which is the selected image variation type, and changed property information of the UI object. The second generative model may also be referred to as a generative model capable of changing the property information of the UI object.

In operation S1448, the electronic device 2000 may change existing property information of the UI object. The electronic device 2000 may match changed property information of the UI object with a synthetic image and store the matching pair.

In operation S1449, the electronic device 2000 may check whether synthetic images corresponding to all image variation types have been generated. When synthetic images corresponding to all image variation types have not been generated, the electronic device 2000 may perform operations S1442 to S1448 for image variation types for which image variations have not yet been generated.

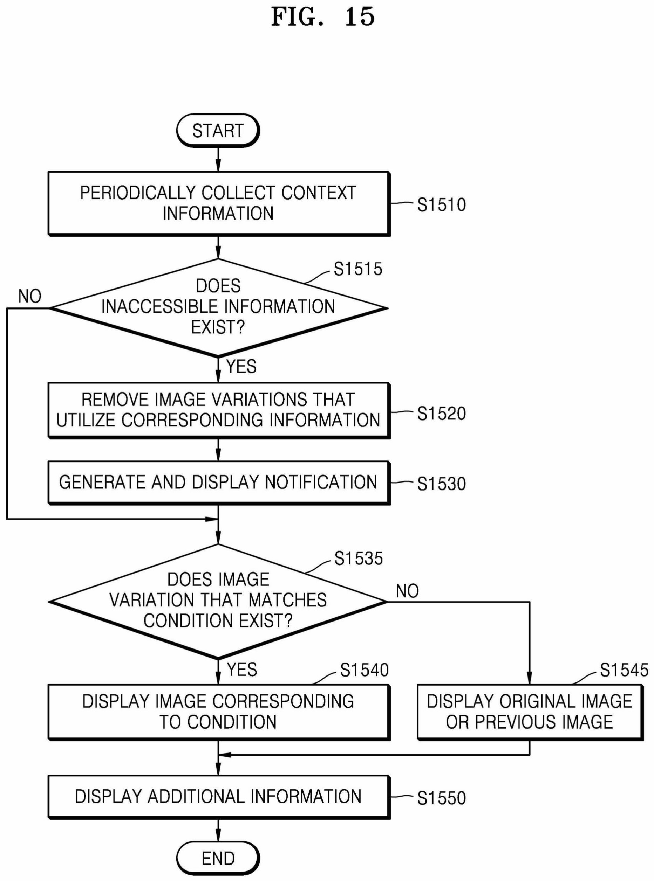

FIG. 15 is a flowchart illustrating an operation in which an electronic device provides a customized screen, according to an embodiment of the disclosure.

In operation S1510, the electronic device 2000 may periodically collect context information. The context information may include real-time information including at least one of time information or weather information. Furthermore, the context information may include information indicating various contexts related to the user. The context information may include, for example, ambient temperature, humidity, illuminance, altitude, and various types of information related to the user's emotions, activities, life routine, health, etc., but is not limited thereto.

In operation S1515, the electronic device 2000 may check whether any of the context information is inaccessible to the electronic device 2000. For example, current time information may be obtained, but current weather information may not be obtained. In this case, the weather information corresponds to inaccessible information. When the inaccessible information exists, the electronic device 2000 may perform operations S1520 and S1530.

In operation S1520, the electronic device 2000 may remove image variations that utilize the inaccessible information.

In an embodiment of the disclosure, the electronic device 2000 may generate synthetic images for each image variation type, and collectively generate synthetic images corresponding to all image variation types. Because this has been described above in the description with respect to FIG. 14, a description thereof is omitted for brevity.

For example, the electronic device 2000 may have generated synthetic images corresponding to time variation, weather variation, and seasonal variation. In this case, when the electronic device 2000 is unable to access weather information, images corresponding to the weather variation may not be provided to the user according to the current context and are therefore not used as customized images. Thus, the electronic device 2000 may remove image variations that utilize weather information that is inaccessible information.

In an embodiment of the disclosure, when the inaccessible information exists, the electronic device 2000 may use previously stored information. For example, when the electronic device 2000 is unable to access today's weather information, the electronic device 2000 may use today's weather stored at a previous time point (e.g., yesterday, etc.). In this case, images corresponding to the weather variation may not be removed. In one or more examples, when there is inaccessible information, the electronic device 2000 may predict the inaccessible information. For example, when the weather information is inaccessible, the electronic device 2000 may use an Al model to predict the weather information based on past weather information.

In operation S1530, the electronic device 2000 may generate and display a notification. When the invalid image variation type is removed in operation S1520, the electronic device 2000 may generate a notification indicating the removed image variation type and display the notification on the screen. For example, when the electronic device 2000 is unable to access weather information, the electronic device 2000 may generate a notification indicating that a weather variation type has been removed and display the notification on the screen.

In operation S1535, the electronic device 2000 may check whether an image variation that matches a condition exists.

In an embodiment of the disclosure, the electronic device 2000 may select an image variation that matches a current condition based on the context information and predefined conditions. For example, the context information may be real-time information. The electronic device 2000 may identify a current time from the real-time information, and identify a condition corresponding to the current time based on predefined conditions corresponding to the time variation. The electronic device 2000 may select, based on the identified condition, a time variation image corresponding to the current time from among the synthetic images. In detail, when the current time is 11:30 am, the electronic device 2000 may identify, based on the predefined conditions, that the context information is included in the noon time range (11:00 am to 13:00 pm), and identify, based on the accessible value time="noon", an image corresponding to the noon time range among the synthetic images.

When an image variation that matches the condition exists, the electronic device 2000 may display an image corresponding to the condition (operation S1540). When the image variation that matches the condition does not exist, the electronic device 2000 may display an original image or a previously selected image (operation S1545). The image displayed on the screen in operations S1540 or operation S1545 may be referred to as a modified image or customized image.

In operation S1550, the electronic device 2000 may display additional information.

In an embodiment of the disclosure, the electronic device 2000 may display a Ul object as additional information. The electronic device 2000 may provide a customized screen including the customized image and the UI object. In an embodiment of the disclosure, the UI object may be changed with properties optimized so that the UI object may be displayed with the customized image.

However, the additional information is not limited to the UI object. For example, the additional information may include various types of data such as text, icons, audio, etc. In detail, the additional information may be of text type. Additional information of text type may be referred to as contextual text. For example, the contextual text may include text representing a description of a given environment and/or situation, or text representing additional information related to the environment/situation, etc. When the current weather is "rainy", the contextual text may be "Don't forget to take an umbrella".

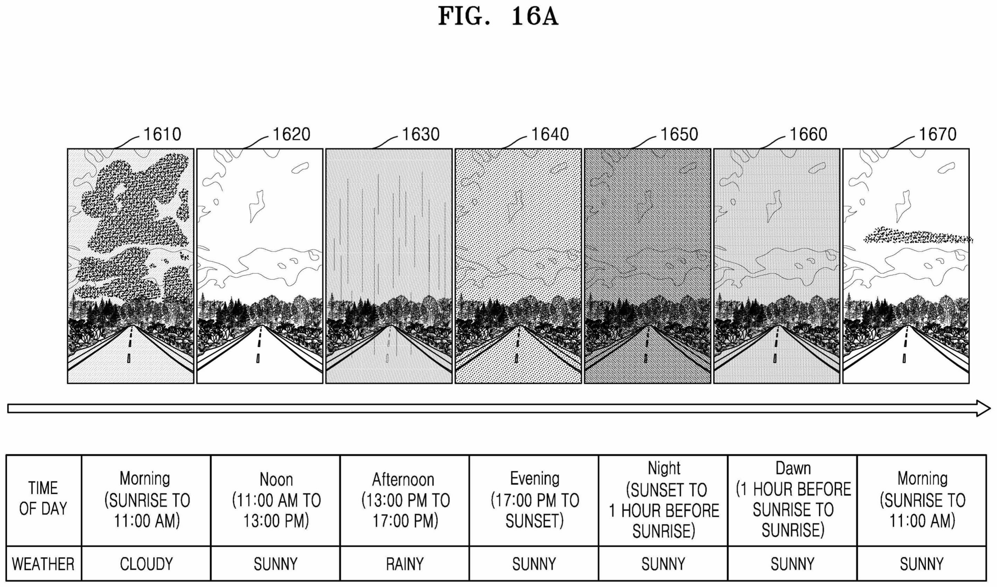

FIG. 16A is a diagram illustrating an operation in which an electronic device provides a dynamic screen, according to an embodiment of the disclosure.

In an embodiment of the disclosure, the electronic device 2000 may provide a customized dynamic screen (hereinafter, a dynamic screen) when a customized screen dynamically changes according to changes in context information. For example, the context information may be real-time information. The electronic device 2000 may dynamically change a user-customized image and a UI object based on the real-time information.

In an embodiment of the disclosure, the electronic device 2000 may generate synthetic images corresponding to various image variations by using a generative model. The electronic device 2000 may determine, from among the synthetic images, a customized image based on the real-time information. When the real-time information changes, the electronic device 2000 may change the customized image.

For example, as shown in FIG. 16A, the electronic device 2000 may select a customized image to be displayed from sunrise to 11:00 am as a first image 1610. The first image 1610 is selected from among synthetic images that are generated by the electronic device 2000 based on an original image by using the generative model, and may be an image having a context of {morning, cloudy} corresponding to current real-time information.

The electronic device 2000 may update the real-time information. As the real-time information is updated, the electronic device 2000 may select a customized image to be displayed from 11:00 am to 13:00 pm as a second image 1620. The second image 1620 is selected from among the synthetic images that are generated by the electronic device 2000 based on the original image by using the generative model, and may be an image having a context of {noon, sunny} corresponding to the updated real-time information.

In the same manner, as the real-time information is updated, the electronic device 2000 may dynamically change the customized image to a third image 1630 having a context of {afternoon, rainy}, a fourth image 1640 having a context of {evening, sunny}, a fifth image 1650 having a context of {night, sunny}, a sixth image 1660 having a context of {dawn, sunny}, a seventh image 1670 having a context of {morning, sunny}, etc.

In an embodiment of the disclosure, when the customized image is changed, the electronic device 2000 may change property information of the UI object according to the changed image. In addition, when the electronic device 2000 generates synthetic images by using a second generative model capable of changing the properties of a UI object, there may be changed properties of the UI object corresponding to the synthetic images. In this case, the electronic device 2000 may obtain changed property information of the UI object corresponding to the changed image.

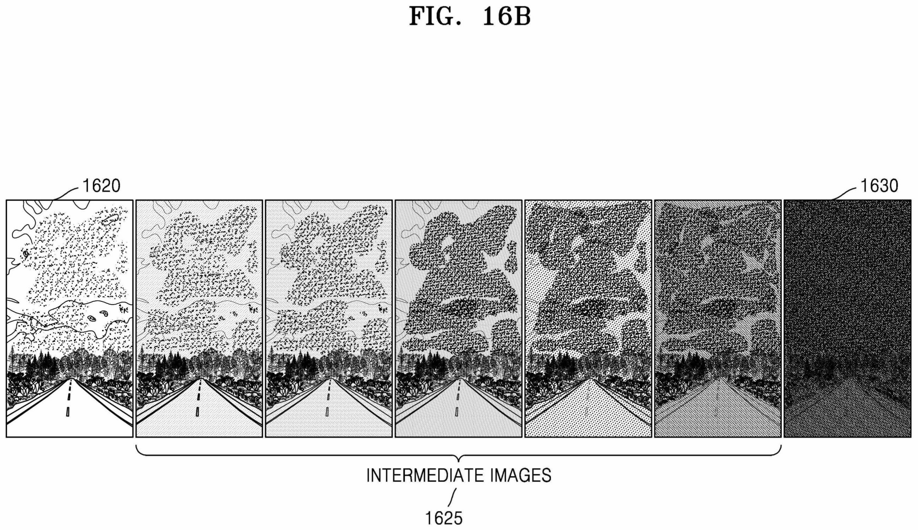

FIG. 16B is a diagram illustrating an operation in which an electronic device generates a dynamic screen, according to an embodiment of the disclosure.

In describing the operation of FIG. 16B, referring to the example from the description with respect to FIG. 16A, the electronic device 2000 may display the second image 1620 from 11:00 am to 13:00 pm, and the third image 1630 after 13:00 pm. In this case, such a screen change may be expressed unnaturally due to a difference in context between the second image 1620 and the third image 1630.

In an embodiment of the disclosure, the electronic device 2000 may generate intermediate images that constitute a dynamic screen. For example, the electronic device 2000 may generate intermediate images 1625 between the second image 1620 and the third image 1630 by using frame interpolation. Because various known interpolation algorithms may be used for frame interpolation, description of specific technical methods of frame interpolation is omitted herein.

The electronic device 2000 may display the intermediate images 1625 generated using frame interpolation. For example, the electronic device 2000 may use the intermediate images 1625 between the second image 1620 and the third image 1630 to achieve smooth transition from the second image 1620 to the third image 1630.

In an embodiment of the disclosure, the electronic device 2000 may generate the intermediate images 1625 constituting a dynamic screen by using a video generative model. The video generative model may comprise a diffusion model including a "diffusion-reverse diffusion" process which is adding and removing noise to image. The video generative model may include a noise predictor for processing the diffusion-reverse diffusion process. For example, the noise predictor may be implemented based on a video U-Net architecture, but is not limited thereto. In addition, when training a video generative model to generate image frames constituting a video, a temporal attention mechanism for merging information according to time and a spatial attention mechanism for assigning weights to important parts of an image to improve image resolution may be used. Because the video generative model for generating the intermediate images 1625 may use various known architectures and/or algorithms, description of specific technical methods is omitted herein.

In an embodiment of the disclosure, the electronic device 2000 may provide a frame adjustment function for the dynamic screen when the intermediate images 1625 are generated. The electronic device 2000 may adjust a frame rate per second of the dynamic screen based on a user input.

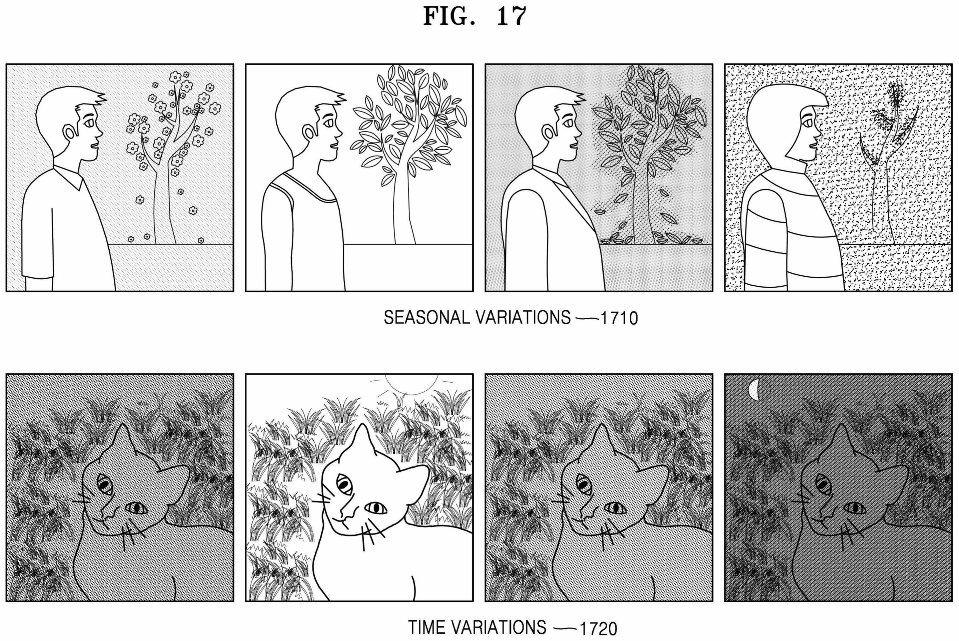

FIG. 17 is a diagram illustrating an operation in which an electronic device provides image variations, according to an embodiment of the disclosure.

In an embodiment of the disclosure, the electronic device 2000 may provide the user with a function of changing an input image.

The electronic device 2000 may obtain an original image and generate synthetic images corresponding to various variations of the original image by using a generative model. The original image may be obtained via a user input. For example, the electronic device 2000 may obtain an image that the user wishes to personalize, such as a selfie image, a pet image, or the like, based on a user input.

In an embodiment of the disclosure, the electronic device 2000 may obtain a plurality of predefined prompts prestored in the electronic device 2000. The electronic device 2000 may obtain synthetic images by inputting the obtained image (e.g., selfie image) and the predefined prompts to the generative model. The user may select a desired image variation among the generated synthetic images. For example, the electronic device 2000 may provide the user with images corresponding to seasonal variations 1710 of the selfie image based on a user input.

In an embodiment of the disclosure, the electronic device 2000 may obtain a predefined prompt from the user. The electronic device 2000 may obtain synthetic images by inputting the obtained image (e.g., pet image) and the obtained predefined prompt to the generative model. For example, the predefined prompt input by the user may be "Generate time variations of the image." The electronic device 2000 may provide the user with images corresponding to time variations 1720 of the pet image based on the user input.

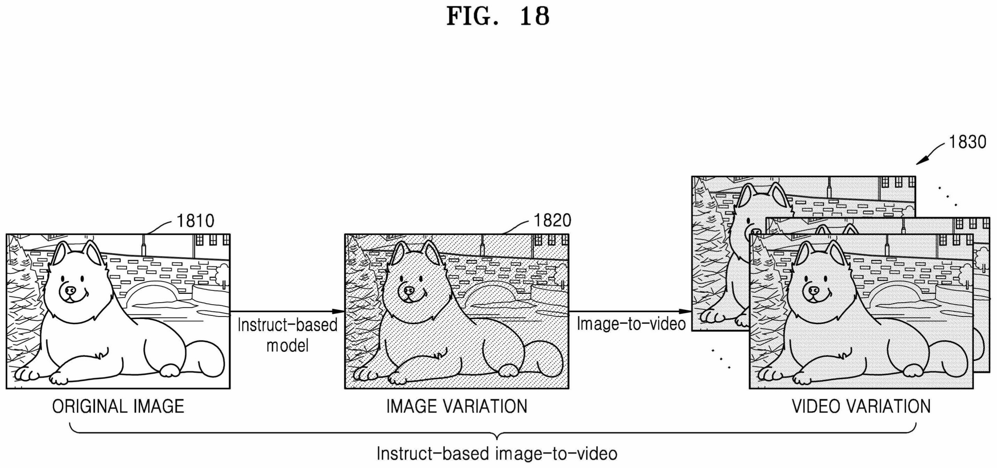

FIG. 18 is a diagram illustrating an operation in which an electronic device generates a video variation, according to an embodiment of the disclosure.

The electronic device 2000 may generate a video variation. For variation types such as weather variation, providing dynamic visual effects such as snow, rain, and wind is effective. In this case, it may be more effective to provide video variations instead of image variations. In one or more examples, video variations may include a time variation where the time of day reflected in the video is modified.

In an embodiment of the disclosure, the electronic device 2000 may generate an image variation 1820 based on an original image 1810 and generate a video variation 1830 based on the image variation 1820. The image variation 1820 may be obtained by a generative model that takes as input the original image 1810 and a predefined prompt and outputs the image variation 1820. The video variation 1830 may be obtained by an image-to-video model that takes the image variation 1820 as input and outputs the video variation 1830.

In an embodiment of the disclosure, the electronic device 2000 may generate the video variation 1830 based on the original image 1810. In this case, a generative model may be used that is trained to generate the video variation 1830 by taking as input the original image 1810 and predefined prompts.

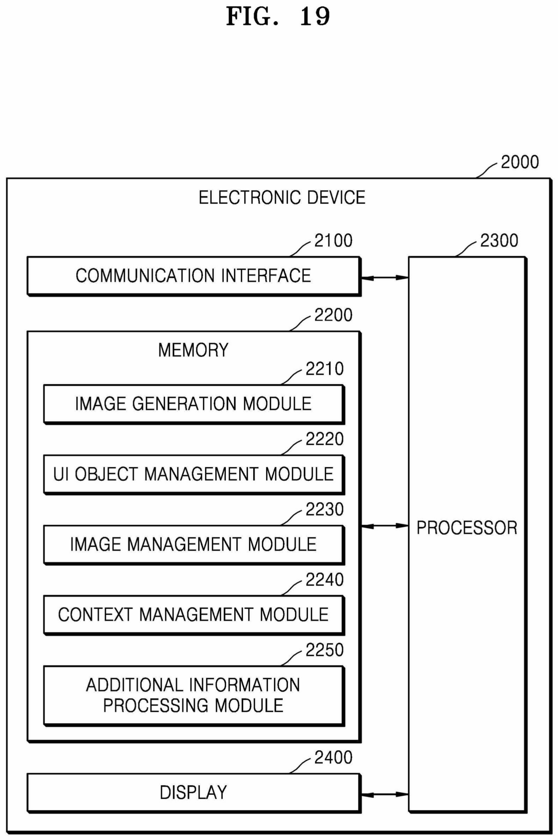

FIG. 19 is a block diagram of a configuration of an electronic device according to an embodiment of the disclosure.

In an embodiment of the disclosure, the electronic device 2000 may include a communication interface 2100, a memory 2200 a processor 2300, and a display 2400.

The communication interface 2100 may perform data communication with other electronic devices according to control by the processor 2300.

The communication interface 2100 may include, for example, a communication circuit capable of performing data communication between the electronic device 2000 and another electronic device (e.g., a server) by using at least one of data communication methods including wired local area network (LAN), wireless LAN, Wi-Fi, Bluetooth, ZigBee, Wi-Fi Direct (WFD), Infrared Data Association (IrDA), Bluetooth Low Energy (BLE), near field communication (NFC), wireless broadband Internet (WiBro), World Interoperability for Microwave Access (WiMAX), Shared Wireless Access Protocol (SWAP), Wireless Gigabit Alliance (WiGig), and radio frequency (RF) communication.

The communication interface 2100 may transmit and receive data necessary for providing a customized image to and from a server. For example, the communication interface 2100 may transmit a reference original image to the server, and receive, from the server, a synthetic image that is a variation of the original image.

The memory 2200 may store instructions, data structures, and program code readable by the processor 2300. Operations performed by the processor 2300 may be implemented by executing instructions or code of a program stored in the memory 2200.

The memory 2200 may include non-volatile memory, including at least one of a flash memory-type memory, a hard disk-type memory, a multimedia card micro-type memory, a card-type memory (e.g., Secure Digital (SD) or eXtreme Digital (XD) memory, etc.), read-only memory (ROM), electrically erasable programmable ROM (EEPROM), PROM, magnetic memory, magnetic disk, or optical disk, and volatile memory such as random access memory (RAM) or static RAM (SRAM).

The memory 2200 may store one or more instructions and/or programs that cause the electronic device 2000 to operate to provide a customized screen. For example, the memory 2200 may store instruction code and/or programs for implementing functions of the image generation module 2210, the UI object management module 2220, the image management module 2230, the context management module 2240, and the additional information processing module 2250.

The processor 2300 may control all operations of the electronic device 2000. For example, the processor 2300 may execute one or more instructions of a program stored in the memory 2200 to control all operations of the electronic device 2000 so that the electronic device 2000 provides a customized screen to the user. The processor 2300 may be configured as one or more processors.

For example, the processor 2300 may consist of, but is not limited to, at least one of a central processing unit (CPU), a microprocessor, a graphics processing unit (GPU), application specific integrated circuits (ASICs), digital signal processors (DSPs), digital signal processing devices (DSPDs), programmable logic devices (PLDs), field programmable gate arrays (FPGAs), an application processor (AP), a neural processing unit (NPU), or a dedicated Al processor designed with a hardware structure specialized for processing Al models.

The processor 2300 may execute the image generation module 2210 to generate synthetic images corresponding to variations of an input image. The image generation module 2210 may include a generative model. Because the operations of the image generation module 2210 have already been described with reference to the previous drawings, descriptions thereof are omitted herein.

The processor 2300 may execute the UI object management module 2220 to manage property information of a UI object. The processor 2300 may use the UI object management module 2220 to identify property information of a UI object or update the property information of the UI object. Because the operations of the UI object management module 2220 have already been described with reference to the previous drawings, descriptions thereof are omitted.

The processor 2300 may execute the image management module 2230 to determine a modified image (i.e., a customized image). The processor 2300 may use the image management module 2230 to determine, among synthetic images generated by the generative model, a synthetic image corresponding to the user's context as the customized image. Because the operations of the image management module 2230 have already been described with reference to the previous drawings, descriptions thereof are omitted herein.

The processor 2300 may execute the context management module 2240 to obtain and manage various context information related to the user. Context information may include real-time information including time information and weather information. The context management module 2240 may provide context information for determining a customized image to the image management module 2230. Because the operations of the context management module 2240 have already been described with reference to the previous drawings, descriptions thereof are omitted herein.

The processor 2300 may execute the additional information processing module 2250 to process various pieces of additional information that may be displayed on a customized screen. The additional information processing module 2250 may receive context information from the context management module 2240. The additional information processing module 2250 may generate data, such as text, icons, audio, etc., which is relevant to a context, based on the context information, and cause additional information to be displayed on the customized screen. Because the operations of the additional information processing module 2250 have already been described with reference to the previous drawings, descriptions thereof are omitted.

Moreover, the modules stored in the memory 2200 are for convenience of description and are not necessarily limited thereto. Other modules may be added or some of the modules may be omitted to implement the above-described embodiments of the disclosure. In addition, a module may be subdivided into a plurality of modules distinguished according to its detailed functions, and some of the modules may be combined and implemented as a single module.

The display 2400 may output an image signal on a screen of the electronic device 2000 according to control by the processor 2300. For example, the display 2400 may output, on the screen, image signals, such as an original image and various variations of the original image, which are processed in the process of the electronic device 2000 providing a customized screen. The display 2400 may include a touch panel. The touch panel may include one or more touch sensors that detect touch input. In an embodiment of the disclosure, a user input may be received via the touch panel.

Although not shown in FIG. 19, the electronic device 2000 may further include additional components to perform the operations described in the above-described embodiments of the disclosure. For example, the electronic device 2000 may further include a camera. The electronic device 2000 may store images obtained using the camera in the memory 2200.

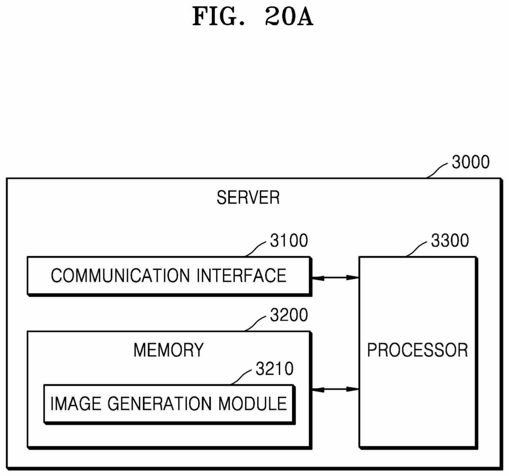

FIG. 20A is a block diagram of a configuration of a server according to an embodiment of the disclosure.

In an embodiment of the disclosure, a server 3000 may include a communication interface 3100, a memory 3200, and a processor 3300. The server 3000 may be a computing device that has higher performance than the electronic device 2000 and is capable of performing complex calculations and tasks using large-scale data, such as training, inference, management, and distribution of a generative model.

The communication interface 3100 may perform data communication with other electronic devices according to control by the processor 3300.

The communication interface 3100 may include, for example, a communication circuit capable of performing data communication between the server 3000 and another electronic device (e.g., the electronic device 2000) by using at least one of data communication methods including wired LAN, wireless LAN, Wi-Fi, Bluetooth, ZigBee, WFD, IrDA, BLE, NFC, WiBro, WiMAX, SWAP, WiGig, and RF communication.

The communication interface 3100 may transmit and receive data necessary for providing a customized image to and from the electronic device 2000 according to control by the processor 3300. For example, the server 3000 may receive an original image from the electronic device 2000 via the communication interface 3100, and transmit to the electronic device 2000 a synthetic image generated using the generative model. The server 3000 may also train the generative model, transmit the trained generative model to the electronic device 2000, and/or transmit a training dataset for training the generative model to the electronic device 2000.

The memory 3200 may store instructions, data structures, and program code readable by the processor 3300. Operations performed by the processor 3300 may be implemented by executing instructions or code of a program stored in the memory 3200.

The memory 3200 may include non-volatile memory, including at least one of a flash memory-type memory, a hard disk-type memory, a multimedia card micro-type memory, a card-type memory (e.g., SD or XD memory, etc.), ROM, EEPROM, PROM, magnetic memory, magnetic disk, or optical disk, and volatile memory such as RAM or SRAM.

The memory 3200 may store one or more instructions and/or programs that cause the server 3000 to operate to provide a customized screen. For example, instruction code and/or program for implementing functions of an image generation module 3210 may be stored in the memory 3200.

The processor 3300 may control all operations of the server 3000. For example, the processor 3300 may execute one or more instructions of a program stored in the memory 3200 to control all operations of the server 3000 so that the server 3000 provides a customized screen. The processor 3300 may be configured as one or more processors.

For example, the processor 3300 may consist of, but is not limited to, at least one of a CPU, a microprocessor, a GPU, ASICs, DSPs, DSPDs, PLDs, FPGAs, an AP, an NPU, or a dedicated Al processor designed with a hardware structure specialized for processing Al models.

The processor 3300 may execute the image generation module 3210 to generate synthetic images corresponding to variations of an input image. The image generation module 3210 may include the generative model. Because the operations of the image generation module 3210 have already been described with reference to the previous drawings, descriptions thereof are omitted herein.

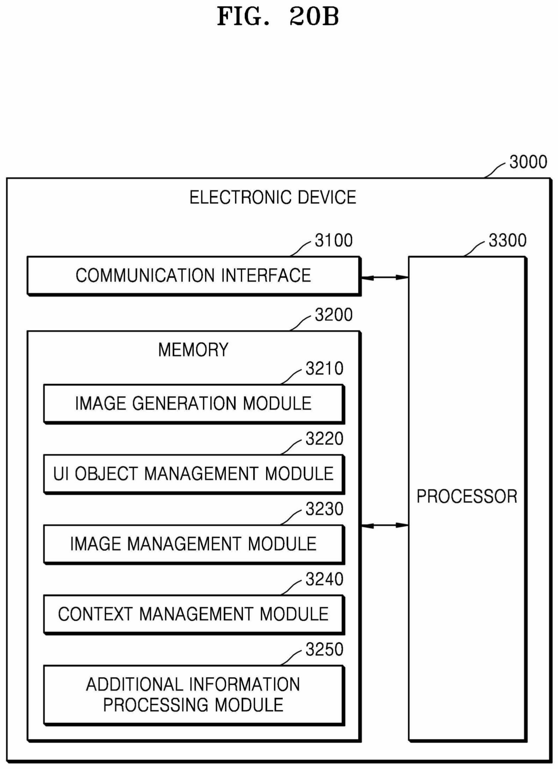

FIG. 20B is a block diagram of a configuration of a server according to an embodiment of the disclosure.

In an embodiment of the disclosure, the operations performed by the electronic device 2000 described above may be performed independently by the server 3000. The server 3000 may obtain an original image from a user, generate synthetic images by altering the original image, and determine a customized image from the synthetic images. The server 3000 may change property information of a UI object so that the UI object is optimized for the customized image. The server 3000 may transmit the customized image and the property information of the UI object to the electronic device 2000, so that the electronic device 2000 may provide a customized screen. In one or more examples, the server 3000 may be a distributed server comprising a plurality of servers.

The server 3000 may include a communication interface 3100, a memory 3200, and a processor 3300. The memory 3200 may store instruction code and/or programs for implementing functions of an image generation module 3210, a UI object management module 3220, an image management module 3230, a context management module 3240, and an additional information processing module 3250.

Because operations of the UI object management module 3220, the image management module 3230, the context management module 3240, and the additional information processing module 3250 of the server 3000 may be inferred from the operations of the UI object management module 2220, the image management module 2230, the context management module 2240, and the additional information processing module 2250 of the electronic device 2000, descriptions thereof are omitted for brevity.

The disclosure relates to a method, electronic device, and server for generating and providing a customized screen that adaptively changes depending on a situation. Also, the disclosure relates to a method of training a generative model for providing a customized image and performing inference in the generative model. The technical solutions to be achieved in the disclosure are not limited to those described above, and other technical solutions not described will be clearly understood by one of ordinary skill in the art from the description herein.

According to an aspect of the disclosure, a method, performed by an electronic device, of changing and providing a background screen may be provided.

The method may include obtaining an original image designated as the background screen.

The method may include obtaining time information and weather information.

The method may include obtaining, based on the time information and weather information, a predefined prompt for image generation.

The method may include obtaining display area information of a UI object displayed to be overlaid on the original image.

The method may include generating a modified image corresponding to the time information and weather information by applying the original image, the predefined prompt, and the display area information as input data to a generative model.

In the modified image, a degree to which the predefined prompt is reflected may differ between a display area where the UI object is displayed and a remaining area other than the display area.

The method may further include displaying the modified image and the UI object as the background screen by overlaying the UI object on the modified image.

The method may include obtaining a parameter for adjusting the degree to which the predefined prompt is reflected.

The generating of the modified image may include further applying the parameter as the input data to the generative model.

In the modified image, the predefined prompt may be reflected to a lesser degree in the display area than in the remaining area.

The method may include obtaining property information of the UI object.

The method may include changing a property of the UI object, based on the property information and the modified image.

The changing of the property of the UI object may include identifying, based on the property information, an image feature of the display area of the UI object in the modified image.

The changing of the property of the UI object may include changing the property information based on the image feature of the display area.

The generating of the modified image may include, by using the generative model, generating the modified image such that a first predefined prompt is reflected in a first region of the original image, and a second predefined prompt is reflected in a second region of the original image.

The method may include generating contextual text related to the time information and weather information.

The method may include displaying the contextual text on a screen.

The displaying of the modified image and the UI object as the background screen by overlaying the UI object on the modified image may include dynamically changing the modified image and the UI object based on the time information and weather information to thereby display a result of the changing on the screen.

The generating of the modified image may include obtaining, by using the generative model, synthetic images including at least one feature of the input original image as candidate images.

The generating of the modified image may include determining the modified image from among the candidate images.

The determining of the modified image may include determining the modified image based on a user input.

According to an aspect of the disclosure, an electronic device for changing and providing a background screen may be provided.

The electronic device may include a display, a memory storing one or more instructions, and one or more processors configured to execute the one or more instructions stored in the memory.

The one or more processors may be configured to execute the one or more instructions to obtain an original image designated as the background screen.

The one or more processors may be configured to execute the one or more instructions to obtain time information and weather information.

The one or more processors may be configured to execute the one or more instructions to obtain, based on the time information and weather information, a predefined prompt for image generation.

The one or more processors may be configured to execute the one or more instructions to obtain display area information of a UI object displayed to be overlaid on the original image.

The one or more processors may be configured to execute the one or more instructions to generate a modified image corresponding to the time information and weather information by applying the original image, the predefined prompt, and the display area information as input data to a generative model.

In the modified image, a degree to which the predefined prompt is reflected may differ between a display area where the UI object is displayed and a remaining area other than the display area.

The one or more processors may be configured to execute the one or more instructions to control the display to display the modified image and the UI object as the background screen by overlaying the UI object on the modified image.

The one or more processors may be configured to execute the one or more instructions to obtain a parameter for adjusting a degree to which the predefined prompt is reflected.

The one or more processors may be configured to execute the one or more instructions to further apply the parameter as the input data to the generative model.

In the modified image, the predefined prompt may be reflected to a lesser degree in the display area than in the remaining area.

The one or more processors may be configured to execute the one or more instructions to obtain property information of the UI object.

The one or more processors may be configured to execute the one or more instructions to change a property of the UI object, based on the property information and the modified image.

The one or more processors may be configured to execute the one or more instructions to identify, based on the property information, an image feature of the display area of the UI object in the modified image.

The one or more processors may be configured to execute the one or more instructions to change the property information based on the image feature of the display area.

The one or more processors may be configured to execute the one or more instructions to, by using the generative model, generate the modified image such that a first predefined prompt is reflected in a first region of the original image, and a second predefined prompt is reflected in a second region of the original image.

The one or more processors may be configured to execute the one or more instructions to generate contextual text related to the time information and weather information.

The one or more processors may be configured to execute the one or more instructions to control the display to display the contextual text on a screen of the electronic device.

The one or more processors may be configured to execute the one or more instructions to control the display to dynamically change the modified image and the UI object based on the time information and weather information to thereby display a result of the changing on the screen.

The one or more processors may be configured to execute the one or more instructions to obtain, by using the generative model, synthetic images including at least one feature of the input original image as candidate images.

The one or more processors may be configured to execute the one or more instructions to determine the modified image from among the candidate images.

The one or more processors may be configured to execute the one or more instructions to determine, based on a user input, the modified image customized for the user.

According to an aspect of the disclosure, a method, performed by an electronic device, of changing and providing a background screen may be provided.

The method may include obtaining an image. The method may include obtaining time information and weather information.

The method may include obtaining, based on the time information and weather information, a predefined prompt of a generative model corresponding to the image.

The method may include generating a modified image including at least one feature of the image by applying the image and the predefined prompt as input data to the generative model.

The method may include displaying the modified image and the UI object on a screen of the electronic device by overlaying the UI object on the modified image.

According to an aspect of the disclosure, an electronic device for changing and providing a background screen may be provided.

The electronic device may include a display, a memory storing one or more instructions, and one or more processors configured to execute the one or more instructions stored in the memory.

The one or more processors may be configured to execute the one or more instructions to obtain an image.

The one or more processors may be configured to execute the one or more instructions to obtain time information and weather information.

The one or more processors may be configured to execute the one or more instructions to obtain, based on the time information and weather information, a predefined prompt of a generative model for the image.

The one or more processors may be configured to execute the one or more instructions to generate a modified image including at least one feature of the image by applying the image and the predefined prompt as input data to the generative model.

The one or more processors may be configured to execute the one or more instructions to control the display to display the modified image and the UI object on a screen of the electronic device by overlaying the UI object on the modified image.

According to an aspect of the disclosure, a method, performed by an electronic device, of changing and providing a background screen may be provided.

The method may include obtaining an original image designated as the background screen. The method may include obtaining time information and weather information.

The method may include obtaining, based on the time information and weather information, a predefined prompt of a generative model for the image.

The method may include obtaining property information of a UI object displayed to be overlaid on the original image.

The method may include generating a modified image corresponding to the time information and weather information and changed property information of the UI object by applying the original image, the predefined prompt, and the property information of the UI object as input data to the generative model.

The method may include changing a property of the UI object based on the changed property information of the UI object.

The method may include displaying the modified image and the UI object on the screen by overlaying the UI object on the modified image.

According to an aspect of the disclosure, an electronic device for changing and providing a background screen may be provided.

The electronic device may include a display, a memory storing one or more instructions, and one or more processors configured to execute the one or more instructions stored in the memory.

The one or more processors may be configured to execute the one or more instructions to obtain an original image designated as the background screen.

The one or more processors may be configured to execute the one or more instructions to obtain time information and weather information.

The one or more processors may be configured to execute the one or more instructions to obtain, based on the time information and weather information, a predefined prompt of a generative model for the image.

The one or more processors may be configured to execute the one or more instructions to obtain property information of a UI object displayed to be overlaid on the original image.

The one or more processors may be configured to execute the one or more instructions to generate a modified image corresponding to the time information and weather information and changed property information of the UI object by applying the original image, the predefined prompt, and the property information of the UI object as input data to the generative model.

The one or more processors may be configured to execute the one or more instructions to change a property of the UI object based on the changed property information of the UI object.

The one or more processors may be configured to execute the one or more instructions to control the display to display the modified image and the UI object on the screen by overlaying the UI object on the modified image.

Moreover, embodiments of the disclosure may also be implemented in the form of recording media including instructions executable by a computer, such as a program module executed by the computer. The computer-readable recording media may be any available media that are accessible by a computer and include both volatile and nonvolatile media and both removable and non-removable media. Furthermore, the computer-readable recording media may include both computer storage media and communication media. The computer storage media include both volatile and nonvolatile, removable and non-removable media implemented using any method or technology for storage of information such as computer-readable instructions, data structures, program modules, or other data. The communication media typically embody computer-readable instructions, data structures, program modules, or other data in a modulated data signal.

A computer-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment of the disclosure, methods according to the embodiments of the disclosure may be included in a computer program product when provided. The computer program product may be traded, as a product, between a seller and a buyer. The computer program product may be distributed in the form of a computer-readable storage medium (e.g., compact disc ROM (CD-ROM), universal serial bus (USB), etc.) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the computer-readable storage medium such as a memory of a server of a manufacturer, a server of an application store, or a relay server.

The above description of the disclosure is provided for illustration, and it will be understood by those of ordinary skill in the art that changes in form and details may be readily made therein without departing from technical idea or essential features of the disclosure. Accordingly, the above embodiments of the disclosure and all aspects thereof are merely examples and are not limiting. For example, each component defined as an integrated component may be implemented in a distributed fashion, and likewise, components defined as separate components may be implemented in an integrated form.

The scope of the disclosure is defined not by the detailed description thereof but by the following claims, and all the changes or modifications within the meaning and scope of the appended claims and their equivalents will be construed as being included in the scope of the disclosure.

## Claims

1. A method, performed by an electronic device, of changing a background screen, the method comprising:
obtaining an original image designated as the background screen;
obtaining time information and weather information;
obtaining, based on the time information and the weather information, a predefined prompt for image generation;
obtaining display area information of a user interface (UI) object that is overlaid on the original image;
generating a modified image corresponding to the time information and the weather information by applying the original image, the predefined prompt, and the display area information as input data to a generative model that generates the modified image, wherein in the modified image, the predefined prompt is reflected in a display area where the UI object is displayed in accordance with a first degree, and the predefined prompt is reflected in remaining area other than the display area in accordance with a second degree that is different from the first degree; and
displaying the modified image and the UI object as the background screen by overlaying the UI object on the modified image.

2. The method of claim 1, further comprising:
obtaining a parameter for adjusting the first degree or the second degree,
wherein the generating the modified image comprises
further applying the parameter as the input data to the generative model.

3. The method of claim 2, wherein the first degree is less than the second degree such that in the modified image, the predefined prompt is reflected to a lesser degree in the display area than in the remaining area.

4. The method of claim 1, further comprising:
obtaining property information of the UI object; and
changing a property of the UI object based on the property information of the UI object and the modified image.

5. The method of claim 4, wherein the changing of the property of the UI object comprises:
identifying, based on the property information, an image feature of the display area of the UI object in the modified image; and
changing the property of the UI object based on the image feature of the display area.

6. The method of claim 4, wherein the predefined prompt comprises a first predefined prompt and a second predefined prompt, and
wherein the generating of the modified image comprises:
generating, by using the generative model, the modified image such that the first predefined prompt is reflected in a first region of the original image, and the second predefined prompt is reflected in a second region of the original image.

7. The method of any one of claims 1 to 6, further comprising:
generating contextual text related to the time information and the weather information; and
displaying the contextual text on a screen of the electronic device.

8. An electronic device for changing a background screen, the electronic device comprising:
a display;
memory storing one or more instructions; and
one or more processors operatively coupled to the memory and the display, and configured to execute the one or more instructions stored in the memory,
wherein the one or more instructions, when executed by the one or more processors, cause the electronic device to:
obtain an original image designated as a background screen,
obtain time information and weather information,
obtain, based on the time information and the weather information, a predefined prompt for image generation,
obtain display area information of a user interface (UI) object that is overlaid on the original image,
generate a modified image corresponding to the time information and the weather information by applying the original image, the predefined prompt, and the display area information as input data to a generative model that generates the modified image, wherein in the modified image, the predefined prompt is reflected in a display area where the UI object is displayed in accordance with a first degree, and the predefined prompt is reflected in a remaining area other than the display area in accordance with a second degree that is different from the first degree, and
control the display to display the modified image and the UI object as the background screen by overlaying the UI object on the modified image.

9. The electronic device of claim 8, wherein the one or more instructions, when executed by the one or more processors, further cause the electronic device to:
obtain a parameter for adjusting the first degree or the second degree, and
wherein the input data further includes the parameter.

10. The electronic device of claim 9, wherein the first degree is less than the second degree such that in the modified image, the predefined prompt is reflected to a lesser degree in the display area than in the remaining area.

11. The electronic device of claim 8, wherein the one or more instructions, when executed by the one or more processors, further cause the electronic device to:
obtain property information of the UI object, and
change a property of the UI object, based on the property information and the modified image.

12. The electronic device of claim 11, wherein the one or more instructions, when executed by the one or more processors, further cause the electronic device to:
identify, based on the property information, an image feature of the display area of the UI object in the modified image, and
change the property of the UI object based on the image feature of the display area.

13. The electronic device of claim 11, wherein the predefined prompt comprises a first predefined prompt and a second predefined prompt, and
wherein the one or more instructions, when executed by the one or more processors, further cause the electronic device to generate, by using the generative model, the modified image such that the first predefined prompt is reflected in a first region of the original image, and the second predefined prompt is reflected in a second region of the original image.

14. The electronic device of any one of claims 8 to 13, wherein the one or more instructions, when executed by the one or more processors, further cause the electronic device to:
generate contextual text related to the time information and the weather information, and
control the display to display the contextual text on a screen of the electronic device.

15. A method, performed by an electronic device, of changing a background screen, the method comprising:
obtaining an original image designated as the background screen;
obtaining time information and weather information;
obtaining, for the original image based on the time information and the weather information, a predefined prompt of a generative model;
obtaining property information of a user interface (UI) object that is overlaid on the original image;
generating a modified image corresponding to the time information and the weather information, and changed property information of the UI object by applying the original image, the predefined prompt, and the property information of the UI object as input data to the generative model; and
changing a property of the UI object based on the changed property information of the UI object; and
displaying, after the changing the property of the UI object, the modified image and the UI object on a screen by overlaying the UI object on the modified image.
